# EUROPEAN PATENT APPLICATION

(11) **EP 4 195 095 A1**
(43) Date of publication of application: **14.06.2023**
(21) Application number: 21868711.9
(22) Date of filing: 17.09.2021
(51) Int. Cl.: G06F 40/58

(54) **METHOD FOR TRANSLATING INTERFACE OF APPLICATION, AND RELATED DEVICE**

(30) Priority: 18.09.2020 CN 202010990248
(71) Applicant: Huawei Technologies Co., Ltd., Shenzhen, Guangdong 518129 (CN)
(72) Inventor: XU, Qian, Shenzhen, Guangdong 518129 (CN)
(74) Representative: Isarpatent
(86) International application number: PCT/CN2021/119028
(87) International publication number: WO 2022/057889

(57) **Abstract**

A method for translating an interface of an application is provided. A first software module in an electronic device obtains a first layout file from a first application, and draws a first interface of the first application based on the first layout file. The electronic device displays the first interface. First text content is displayed on the first interface. The electronic device detects a first operation. The first software module obtains translated second text content based on the first text content. The first software module draws a second interface of the first application based on the first layout file and the second text content. In response to the first operation, the electronic device displays the second interface. The second text content is displayed on the second interface. In the foregoing method, an interactive operation may be directly performed on an interface that displays a translation result, thereby improving user experience.

## Description

This application claims priority to Chinese Patent Application No. 202010990248.2, filed with the China National Intellectual Property Administration on September 18, 2020 and entitled "METHOD FOR TRANSLATING INTERFACE OF APPLICATION AND RELATED DEVICE", which is incorporated in this application by reference in its entirety.

### TECHNICAL FIELD

Embodiments of this application relate to the field of terminal device technologies, and in particular, to a method for translating an interface of an application and a related device.

### BACKGROUND

As globalization of science and technology develops, to serve users using different languages, an application installed in an electronic device needs to provide interfaces of the application in different languages. In the conventional technology, the electronic device first takes a screenshot of an original text on an original interface of an application, identifies the original text on the screenshot by using an optical character recognition (Optical Character Recognition, OCR) technology, then translates the original text to obtain a translation text, and displays the translation text by using a floating layer or a new window covering the original interface, which may be understood as displaying the translation text on an additional translation text interface covering the original interface. When the interface of the application is translated by using the foregoing method, and when a user needs to perform an interactive operation with a control on the translation text interface of the application, for example, click a button on a page, the user needs to switch from the translation text interface to the original interface to perform the interactive operation. When the user needs to read the translation text, the user needs to switch from the original interface to the corresponding translation text interface. Consequently, user operation steps are cumbersome and human-machine interaction efficiency is low.

### SUMMARY

Embodiments of this application provide a method for translating an interface of an application. After the interface of the application is translated according to the method, an interactive operation may be directly performed on an interface that displays a translation result, thereby simplifying a user operation and improving human-machine interaction efficiency and user experience.

A first aspect of embodiments of this application provides a method for translating an interface of an application, including: A first software module in an electronic device obtains a first layout file from a first application, where the first layout file is used to draw a first interface of the first application, and the first layout file includes first text content. The first software module draws the first interface based on the first layout file. The electronic device displays the first interface, where the first text content is displayed on the first interface. The electronic device detects a first operation. In response to the first operation, the first software module sends the first text content to a second software module in the electronic device for translation, the first software module obtains second text content from the second software module, and the first software module draws a second interface of the first application based on the first layout file and the second text content, where the second text content is obtained after the first text content is translated. In response to the first operation, the electronic device displays the second interface, where the second text content is displayed on the second interface. The electronic device detects a second operation in a first area of the second interface, where the first area is located near the second text content. The electronic device displays a third interface of the first application in response to the second operation, where the third interface is associated with the first text content.

According to the foregoing embodiment, the first text content included in the first layout file obtained by the electronic device from the first application is an original text of an original language version, and then the electronic device may obtain a translation text based on the original text, and the first application does not need to additionally provide different language packages to provide application interfaces of different language versions for a user. This reduces a development difficulty for an application developer. Further, the second interface for displaying the translation text (the second text content) is drawn by the electronic device (which may specifically be the first software module that is in a system of the electronic device and that is configured to draw an interface) based on the first layout file and the second text content. Compared with the first interface, the second interface mainly updates and draws the first text content on the first interface and displays the first text content as the second text content (which may be understood that the electronic device updates obtained to-be-drawn text content in a drawing phase by using the first software module configured to draw the interface of the first application, information obtained by the electronic device from the first application in two different phases of drawing an original text interface and drawing a translation text interface is the same, only information related to the original text interface is obtained, and the first application does not need to perform any modification). Other information (for example, information used to perform an interactive operation with the user) included on the second interface may basically be the same as other information included on the first interface, and the second interface may be understood as an interface belonging to the first application but not an additional floating layer or a new window that covers an original interface of the application. Because the second interface includes information that is included on the first interface and that is used to perform an interactive operation with the user, the user may directly perform an interactive operation with an element on the interface on the second interface (the translation text interface). Specifically, when the user performs the second operation in the first area of the second interface, the first area is located near the second text content. That the electronic device may display a third interface of the first application in response to the second operation, where the third interface is associated with the first text content may be understood as: The third interface displayed after the user performs an interactive operation on an interface element associated with the translation text on the second interface is the same as an interface displayed after the user performs an interactive operation on an interface element associated with the corresponding original text on the first interface. Therefore, in the method, the user can directly perform the same interactive operation on the translation text interface as on the original text interface, and does not need to switch back and forth between the original text interface and the translation text interface to perform the interactive operation, thereby simplifying a user operation and improving human-machine interaction efficiency and user experience.

Further, in the method provided in embodiments, the first software module and the second software module in the operating system of the electronic device may obtain a translation text interface based on an original text interface of an application, and enable the user to directly perform an interactive operation on the translation text interface. The method provides a system-level interface translation improvement solution, which may be applied to any application installed in the electronic device, to implement a cross-application interface translation function, and do not need to additionally provide application interfaces of different language versions for the user by the application developer. This reduces the development difficulty of the application developer.

In a possible implementation of the first aspect of embodiments of this application, the first user interface includes a first text control, the first layout file includes first information, the first information includes the first text content, and the first information is used to draw the first text control. That the first software module in the electronic device draws the first interface based on the first layout file includes: The first software module in the electronic device draws the first text control based on the first information. That the electronic device displays the first interface, where the first text content is displayed on the first interface includes: The electronic device displays the first text control, where the first text content is displayed in the first text control. That the first software module draws a second interface based on the first layout file and the second text content includes: The first software module draws a second text control based on the first information and the second text content. The electronic device displays the second interface, where the second text content is displayed on the second interface includes: The electronic device displays the second text control, where the second text content is displayed in the second text control. That the first area is located near the second text content includes: the first area is located near the second text control. That the third interface is associated with the first text content includes: the third interface is associated with the first text control.

According to the foregoing embodiment, the electronic device improves the drawing process of the text control. In the drawing process, a to-be-translated text is translated, and an original text is replaced with a translation result, so that the translation result is displayed on an original interface of the first control, and the layout file of the application is not changed. This improves applicability of the translation function.

In a possible implementation of the first aspect of embodiments of this application, that the third interface is associated with the first text control includes: The third interface is an interface linked to the first text control; or the third interface is an interface linked to a picture control associated with the first text control, where the picture control is located in the first area. In this implementation, considering that a link (for example, the user taps in an operable area of a control on the first interface to enter an interface linked to the control) that can be used to perform an interactive operation with the user may be set in the first text control, or may be set in the picture control (for example, the first text control is used to prompt a function of the picture control) associated with the first text control, the first area may be an operable area corresponding to the first text control or an operable area corresponding to the picture control associated with the first text control. In this way, diversity of user operations and compatibility of the electronic device with the user operation can be improved.

In a possible implementation of the first aspect of embodiments of this application, the first layout file is an extensible markup language XML file, and the XML file includes the first information.

In a possible implementation of the first aspect of embodiments of this application, the first text control and the second text control each are any one of the following: a text view textview control and a list view listview control. The textview control is a type of text control. The name of the textview control can be another name as long as functions are the same. For example, the textview control can be called a text box control.

In a possible implementation of the first aspect of embodiments of this application, the first software module and the second software module belong to an application framework layer of the electronic device. The first software module and the second software module may be software modules in the operating system of the electronic device, and specifically, may belong to the application framework layer of the operating system of the electronic device. The operating system of the electronic device may be, for example, an Android (android) operating system.

In a possible implementation of the first aspect of embodiments of this application, that the first software module sends the first text content to a second software module in the electronic device for translation, and the first software module obtains second text content from the second software module includes: The first software module sends the first text content to the second software module. The second software module translates the first text content to obtain the second text content. The second software module sends the second text content to the first software module.

In a possible implementation of the first aspect of embodiments of this application, the first text content is in a first language, and the second text content is in a second language. A storage module is disposed in the second software module. That the second software module translates the first text content to obtain the second text content includes: That a first storage unit is stored in the storage module is determined based on an identifier of the first application and the second language, where the first storage unit corresponds to the identifier of the first application and the second language, and the second text content corresponding to the first text content is stored in the first storage unit. The second text content corresponding to the first text content is obtained from the first storage unit. In this embodiment, when the electronic device stores the previously translated second text content, the electronic device may directly obtain the second text content without repeatedly translating the first text content, thereby improving efficiency of obtaining a translation text by the electronic device, and reducing power consumption of the electronic device.

In a possible implementation of the first aspect of embodiments of this application, the first text content is in a first language, and the second text content is in a second language. A storage module and a translation engine are disposed in the second software module. That the second software module translates the first text content to obtain the second text content includes: Whether a first storage unit is stored in the storage module is determined based on an identifier of the first application and the second language, where the first storage unit corresponds to the identifier of the first application and the second language. When the first storage unit is not stored in the storage module, a first storage unit in the storage module is created. The first text content is translated by using the translation engine, and the second text content corresponding to the first text content is obtained. The first text content and the corresponding second text content are stored in the created first storage unit.

According to the foregoing embodiment, the electronic device may store the translation result in a translation cache based on an application identifier and a target language (a language corresponding to a translation text to be translated), so that the translation text is directly obtained in a subsequent translation phase without performing translation again. This can prevent a frozen translation page being displayed because it takes a long time to performing translation for which a server side needs to be invoked to perform translation each time in the conventional technology, reduces a translation processing time, accelerates a display speed of the translation text interface, and improves system running efficiency.

In a possible implementation of the first aspect of embodiments of this application, the first layout file further includes a first parameter and a second parameter of the first text control, the first parameter includes a format parameter of the first text content, and the second parameter includes an appearance parameter corresponding to the first text control. Before the electronic device displays the second interface, the method further includes: The first software module obtains a third parameter based on at least one of the first parameter and the second parameter, where the third parameter includes a format parameter of the second text content. The first software module draws the second text control based on the second parameter and the third parameter.

According to the foregoing embodiment, by adjusting the format parameter of the text content, font deformation or confusion in the text control is avoided, an interface display effect of the application is optimized, and operation experience of the application is improved.

In a possible implementation of the first aspect of embodiments of this application, the format parameter of the first text content or the format parameter of the second text content includes one or more of the following parameters: a font parameter, a font size parameter, a word spacing parameter, and a line spacing parameter, and a parameter of a quantity of words per line, and a parameter of a quantity of lines.

In a possible implementation of the first aspect of embodiments of this application, the first layout file further includes a fourth parameter, and the fourth parameter is used to indicate whether the first text control includes security information. Before the first software module sends the first text content to the second software module, the method further includes: The first software module determines, based on the fourth parameter, that the first text control does not include the security information.

According to the foregoing embodiment, the text control including the security information is identified based on the fourth parameter, and a translation process is not performed for the control including the security information, to achieve an objective of protecting user information security.

In a possible implementation of the first aspect of embodiments of this application, the first interface includes a first picture control, the first layout file further includes third information, the third information includes a path corresponding to a first picture, the first picture includes third text content, and the third information is used to draw the first picture control. That the first software module in the electronic device draws the first interface based on the first layout file includes: Based on the third information, the first software module in the electronic device obtains the first picture and draws the first picture control. That the electronic device displays the first interface includes: The electronic device displays the first picture control, where the first picture is displayed in the first picture control, and the third text content is displayed in the first picture. In response to the first operation, the method further includes: The first software module obtains the third text content from the first picture by using an OCR method. The first software module sends the third text content to the second software module for translation. The first software module obtains fourth text content from the second software module, where the fourth text content is obtained after the third text content is translated. The first software module replaces the third text content in the first picture with the fourth text content, to obtain a second picture including the fourth text content. The first software module drawing a second picture control based on the first layout file and the second picture. That the electronic device displays the second interface includes: The electronic device displays the second picture control, where the second picture is displayed in the second picture control, and the fourth text content is displayed in the second picture.

In a possible implementation of the first aspect of embodiments of this application, the first interface includes a first web page control, the first layout file includes fifth information of the first web page control, and the method further includes: The first software module in the electronic device obtains, from the first application based on the fifth information, a first URL (Uniform Resource Locator, uniform resource locator) corresponding to the first web page control, and obtains, based on the first URL, a first HTML (HyperText Markup Language, hypertext markup language) file corresponding to the first URL, where the first HTML file includes fifth text content, and the first HTML file is used to draw the first web page control. That the first software module draws the first interface based on the first layout file includes: The first software module obtains, based on the first HTML file, a first document object model DOM (Document Object Model) tree corresponding to the first HTML file, obtains the fifth text content from the first DOM tree, and draws the first web page control based on the fifth text content. That the electronic device displays the first interface includes: The electronic device displays the first web page control, where the fifth text content is displayed in the first web page control. In response to the first operation, the method further includes: The first software module sends the fifth text content to the second software module for translation, and the first software module obtains sixth text content from the second software module, where the sixth text content is obtained after the fifth text content is translated. The first software module replaces the first text content in the first DOM tree with the second text content, to obtain a second DOM tree including the second text content. The first software module draws a second web page control based on the first layout file and the second DOM tree. That the electronic device displays the second interface includes: The electronic device displays the second web page control, where the sixth text content is displayed in the second web page control.

According to the foregoing embodiment, the text content in the picture control and the web page control in the application is translated, to implement a technical effect of translating all text content in the application by the electronic device, improve consistency of an overall display language of the application, and improve user experience.

In a possible implementation of the first aspect of embodiments of this application, that the second software module translates the first text content to obtain the second text content includes: The second software module sends the first content to a server, and obtains the second text content from the server.

In a possible implementation of the first aspect of embodiments of this application, that the first software module obtains the third parameter based on the first parameter and the first text includes: A width of the first text is obtained based on the first text and the first parameter. The third parameter is obtained based on the width of the first text and the second text.

In a possible implementation of the first aspect of embodiments of this application, the appearance parameter corresponding to the first text control includes a border width and/or height of the first text control. That the first software module obtains the third parameter based on the first parameter and the first text content includes: The first software module obtains the third parameter based on the first parameter, the second parameter, the first text content, and the second text content.

In a possible implementation of the first aspect of embodiments of this application, that the electronic device displays a third interface of the first application in response to the second operation includes: The electronic device displays the third interface, and the third interface displays seventh text content, where the seventh text content and the second text content are in a same language.

In a possible implementation of the first aspect of embodiments of this application, the electronic device detects a fourth operation, where the fourth operation is used to jump to a home screen application of the electronic device. In response to the fourth operation, the electronic device displays a fourth interface of the electronic device, where the fourth interface is used to display an interface of the home screen application of the electronic device, the fourth interface displays eighth text content, and the eighth text content and the second text content are in a same language.

In a possible implementation of the first aspect of embodiments of this application, the width of the first text content is the same as a width of the second text content.

A second aspect of embodiments of this application provides a method for translating an interface of an application. An electronic device displays a first interface of a first application. The first interface includes a first text control, and the first text control includes first text content. The first text content is displayed on the first interface. The first application is any application installed in the electronic device, the first text control is any text control on the first interface, and the any text control does not involve security information. The electronic device detects a first operation. The first operation is used to indicate the electronic device to perform translation on text content included on an interface of the first application. In response to the first operation, the electronic device displays a second interface of the first application. The second interface includes a second text control, and the second text control includes second text content. The second text content is a translation result of the first text content. The second text content is displayed on the second interface. The electronic device detects a second operation in a first area of the second interface. The first area is located near the second text control. The electronic device displays a third interface of the first application in response to the second operation, where the third interface is associated with the first text control.

In a possible implementation of the second aspect of embodiments of this application, that the electronic device displays a third interface of the first application in response to the second operation includes: The electronic device displays the third interface, where the third interface includes a third text control, and the third text control includes third text content, where the third text content is displayed on the third interface, and the third text content and the second text content are in a same language.

In a possible implementation of the second aspect of embodiments of this application, the any application includes a home screen application of the electronic device.

In a possible implementation of the second aspect of embodiments of this application, the first text control is any one of the following: a text view textview control and a list view listview control.

In a possible implementation of the second aspect of embodiments of this application, that the third interface is associated with the first text control includes: The third interface is an interface linked to the first text control; or the third interface is an interface linked to a picture control associated with the first text control, where the picture control is located in the first area.

In a possible implementation of the second aspect of embodiments of this application, the method further includes: that the electronic device translates, in response to the first operation, the first text content, and obtains the second text content includes: An application framework layer of the electronic device translates, in response to the first operation, the first text content, and obtains the second text content.

It may be understood that the embodiment provided in the second aspect may be used to implement the method provided in the first aspect and the implementations of the first aspect. For details, refer to the method provided in the first aspect and the implementations of the first aspect.

A third aspect of embodiments of this application provides a method for translating an interface of an application, including:

The electronic device obtains a first layout file, where the first layout file is used to draw a first interface of a first application, the first layout file includes first information, the first information is used to draw a first text control on the first interface, the first text control includes first text content, and the first information includes the first text content.

The electronic device displays the first interface based on the first layout file, where the first text content is displayed on the first interface.

The electronic device detects a first operation, where the first operation is used to indicate the electronic device to translate text content included in an interface of the first application including at least the first interface.

In response to the first operation, the electronic device translates the first text content, and obtains second text content, where the second text content is a translation result of the first text content.

In response to the first operation, the electronic device displays a second interface of the first application based on the first layout file and the second text content, where the second interface includes a second text control, the second text control includes the second text content, and the second text content is displayed on the second interface.

The electronic device detects a second operation in a first area of the second interface, where the first area is located near the second text control.

The electronic device displays a third interface of the first application in response to the second operation, where the third interface is associated with the first text control.

In some possible implementations of the third aspect, the electronic device may translate the first text content by using a system layer of the electronic device. Specifically, when preparing to draw the interface of the first application, the system layer (which may be, for example, a software module that may be the system layer of the electronic device and that is used to draw an interface, such as the first software module mentioned in the foregoing aspects) of the electronic device translates text content included in a text control on the obtained interface to obtain a translation text, and then draws by using the translation text during drawing. In an interface drawing phase, the first application sends information about a to-be-drawn interface to the software module (which may be, for example, the second software module mentioned in the foregoing aspects) that is of the system layer of the electronic device and that is configured to draw the interface. Therefore, the software module that is configured to draw the interface can obtain an original text included in the text control from the system layer, and may further perform translation based on the original text to obtain a translation text, and then use the translation text for drawing.

It may be understood that the embodiment provided in the third aspect may be used to implement the method provided in the foregoing aspects. For details, refer to the method provided in the foregoing aspects.

A fourth aspect of the embodiments of this application provides an electronic device. The electronic device includes a first software module, a second software module, a display module, and a detection module.

The first software module is configured to obtain a first layout file from a first application, where the first layout file is used to draw a first interface of the first application, and the first layout file includes first text content.

The first software module is further configured to draw the first interface based on the first layout file.

The display module is configured to display the first interface, where the first text content is displayed on the first interface.

The detection module is configured to detect a first operation.

The first software module is further configured to: in response to the first operation, send the first text content to the second software module in the electronic device for translation, obtain second text content from the second software module, and draw a second interface of the first application based on the first layout file and the second text content, where the second text content is obtained after the first text content is translated.

The display module is further configured to: in response to the first operation, display the second interface, where the second text content is displayed on the second interface.

The detection module is further configured to: detect a second operation in a first area of the second interface, where the first area is located near the second text content.

The display module is further configured to display a third interface of the first application in response to the second operation, where the third interface is associated with the first text content.

It may be understood that the embodiments provided in the fourth aspect may be used to implement the method provided in the foregoing aspects. For details, refer to the method provided in the foregoing aspects and the implementations of the foregoing aspects.

A fifth aspect of embodiments of this application provides an electronic device, including one or more touchscreens, one or more memories, and one or more processors. The one or more memories store one or more programs, and when the one or more processors execute the one or more programs, the electronic device is enabled to implement the method according to any one of the foregoing aspects and the implementations of the foregoing aspects.

A sixth aspect of embodiments of this application provides a computer-readable storage medium, including instructions. When the instructions are run on an electronic device, the electronic device is enabled to perform the method according to any one of the foregoing aspects and the implementations of the foregoing aspects.

A seventh aspect of embodiments of this application provides a computer program product. When the computer program product runs on an electronic device, the electronic device is enabled to perform the method according to any one of the foregoing aspects and the implementations of the foregoing aspects.

According to an eighth aspect, an embodiment of this application provides an apparatus. The apparatus is included in an electronic device. The apparatus has a function of implementing a behavior of the electronic device in the foregoing aspect and the possible implementations of the foregoing aspect. The apparatus may be an element in the electronic device, for example, a chip or a chip system. The function may be implemented by hardware, or may be implemented by executing corresponding software by hardware. The hardware or the software includes one or more modules or units corresponding to the foregoing function, for example, a display module or unit, a detection module or unit, or a processing module or unit.

According to a ninth aspect, an embodiment of this application provides a graphical user interface system in an electronic device. The electronic device has a display, a memory, and one or more processors. The one or more processors are configured to execute one or more computer programs stored in the memory. The graphical user interface includes a graphical user interface displayed when the electronic device performs the method according to any one of the foregoing aspects and implementations of the foregoing aspects.

It can be learned from the foregoing technical solutions that, according to some embodiments provided in this application, the user can directly perform a same interactive operation on the translation text interface as on the original text interface, and does not need to switch back and forth between the original text interface and the translation text interface to perform the interactive operation, thereby simplifying a user operation and improving human-machine interaction efficiency and user experience.

### BRIEF DESCRIPTION OF DRAWINGS

To describe the technical solutions in embodiments of the present invention or in the prior art more clearly, the following briefly describes the accompanying drawings for describing embodiments or the prior art. It is clear that the accompanying drawings in the following description show some embodiments of the present invention, and a person of ordinary skill in the art may still derive other drawings from these accompanying drawings without creative efforts.
FIG. 1 is a schematic diagram of a structure of an electronic device according to an embodiment of this application;
FIG. 2 is a block diagram of a software structure of an electronic device according to an embodiment of this application;
FIG. 3-1-1(a) to FIG. 3-5-2(b) are schematic interface diagrams of translating an interface of an application according to an embodiment of this application;
FIG. 4-1(a) to FIG. 4-11 are schematic diagrams of translating a text control on an interface of an application according to an embodiment of this application;
FIG. 5-1(a) to FIG. 5-7 are schematic diagrams of translating a picture control and a web page control on an interface of an application according to an embodiment of this application;
FIG. 6A to FIG. 6C are a schematic diagram of a working process of translating an interface of an application by a plurality of threads according to an embodiment of this application;
FIG. 7-1 to FIG. 7-4 are schematic diagrams of a software structure and a working process of a translation module according to an embodiment of this application;
FIG. 8 is a schematic diagram of a working process of translating an interface of an application according to an embodiment of this application; and
FIG. 9-1 and FIG. 9-2 are schematic diagrams of working processes of software and hardware in an electronic device according to an embodiment of this application.

### DESCRIPTION OF EMBODIMENTS

To make the objectives, technical solutions, and advantages of embodiments of the present invention clearer, the following clearly and completely describes the technical solutions in a possible implementation with reference to the accompanying drawings in the possible implementation. It is clear that the described embodiments are some but not all of embodiments of the present invention. Embodiments based on the present invention all fall into the protection scope of the present invention.

Terms used in the following embodiments of this application are merely intended to describe particular embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should also be understood that, a term "and/or" used in this application indicates and includes any one or all of possible combinations of one or more listed items.

An electronic device, a user interface used for such an electronic device, and an embodiment used for such an electronic device are described below. In some embodiments, the electronic device may be a portable electronic device that further includes other functions such as a personal digital assistant function and/or a music player function, for example, a mobile phone, a tablet computer, or a wearable electronic device having a wireless communication function (for example, a smartwatch). An example embodiment of the portable electronic device includes but is not limited to a portable electronic device running on iOS, Android, Microsoft, or another operating system. The portable electronic device may alternatively be another portable electronic device, for example, a laptop (Laptop) computer having a touch-sensitive surface or a touch panel. It should be further understood that, in some other embodiments, the electronic device may alternatively not be a portable electronic device, but is a desktop computer having a touch-sensitive surface or a touch panel.

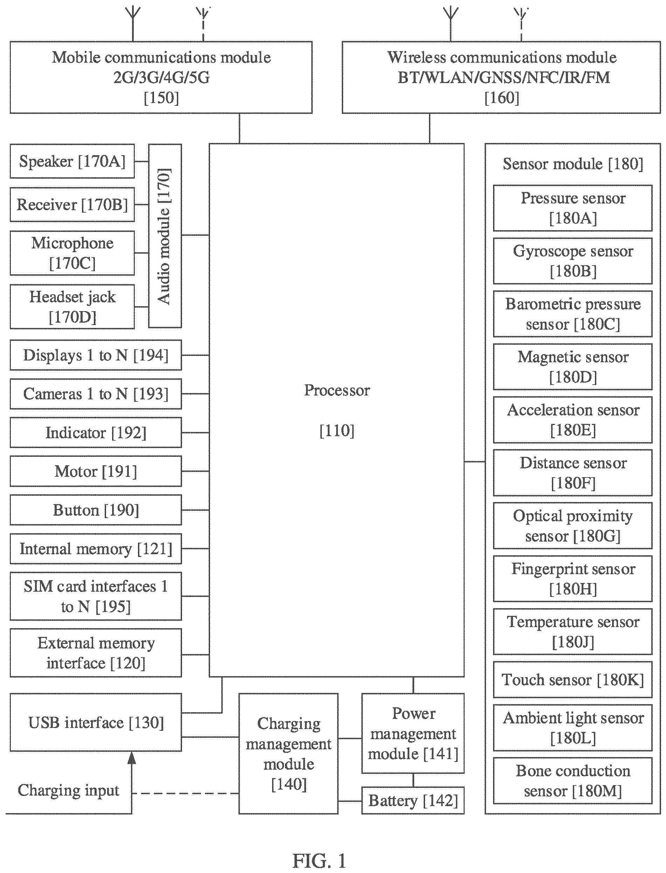

The following first describes an example of an electronic device 100 provided in the following embodiments of this application. FIG. 1 is a schematic diagram of a structure of the mobile device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU). Different processing units may be independent components, or may be integrated into one or more processors.

The controller may generate an operation control signal based on instruction operation code and a time sequence signal, to control instruction fetching and instruction execution.

A memory may further be disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be configured to: perform audio communication, and sample, quantize, and code an analog signal. In some embodiments, the audio module 170 may be coupled to the wireless communications module 160 through the PCM bus interface. In some embodiments, the audio module 170 may alternatively transmit an audio signal to the wireless communications module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communications module 160, the audio module 170, the sensor module 180, or the like. The GPIO interface may alternatively be configured as an I2C interface, an I2S interface, a UART interface, an MIPI interface, or the like.

The USB interface 130 is an interface that conforms to USB standard specifications, and may specifically be a mini USB interface, a micro USB interface, a USB Type-C interface, or the like. The USB interface 130 may be configured to connect to the charger to charge the electronic device 100, or may be configured to perform data transmission between the electronic device 100 and a peripheral device, or may be configured to connect to a headset to play audio by using the headset, or may be configured to connect to another electronic device such as an AR device.

It may be understood that an interface connection relationship between the modules that is shown in embodiments of the present invention is merely an example for description, and does not constitute a limitation on the structure of the electronic device 100. In some other embodiments of this application, the electronic device 100 may alternatively use an interface connection manner different from that in the foregoing embodiment, or may use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device by using the power management module 141 while charging the battery 142.

The power management module 141 is configured to connect the battery 142 and the charging management module 140 to the processor 110. The power management module 141 receives an input of the battery 142 and/or the charging management module 140, and supplies power to the processor 110, the internal memory 121, the display 194, the camera 193, the wireless communications module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 150 can provide a solution, applied to the electronic device 100, to wireless communication including 2G, 3G, 4G, 5G, and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert an amplified signal into an electromagnetic wave for radiation through the antenna 1. In some embodiments, at least some function modules in the mobile communications module 150 may be disposed in the processor 110. In some embodiments, at least some function modules in the mobile communications module 150 may be disposed in a same device as at least some modules in the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communications module 150 or another function module.

The wireless communications module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 160 may be one or more components integrating at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communications module 150 are coupled, and the antenna 2 and the wireless communications module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural network (neural network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 100, such as image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code, and the computer-executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created in a use process of the electronic device 100. In addition, the internal memory 121 may include a high-speed random access memory, and may further include a nonvolatile memory such as at least one disk storage device, a flash memory, or a universal flash storage (universal flash storage, UFS). The processor 110 runs instructions stored in the internal memory 121 and/or instructions stored in the memory disposed in the processor, to perform various function applications of the electronic device 100 and data processing.

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may further be configured to code and decode an audio signal. In some embodiments, the audio module 170 may be disposed in the processor 110, or some function modules in the audio module 170 are disposed in the processor 110.

The speaker 170A, also referred to as a "horn", is configured to convert an audio electrical signal into a sound signal. The electronic device 100 may listen to music or answer a call in a hands-free mode by using the speaker 170A.

The receiver 170B, also referred to as an "earpiece", is configured to convert an audio electrical signal into a sound signal. When a call is answered or speech information is received by using the electronic device 100, the receiver 170B may be put close to a human ear to listen to a voice.

The microphone 170C, also referred to as a "mike" or a "microphone", is configured to convert a sound signal into an electrical signal. When making a call or sending voice information, a user may make a sound near the microphone 170C through the mouth of the user, to enter a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change of the capacitance. When a touch operation is performed on the display 194, the electronic device 100 detects strength of the touch operation by using the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation strength is less than a first pressure threshold is performed on an icon of Messages, an instruction for viewing an SMS message is performed. When a touch operation whose touch operation strength is greater than or equal to the first pressure threshold is performed on the icon of Messages, an instruction for creating a new SMS message is performed.

The gyroscope sensor 180B may be configured to determine a moving posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a motion-controlled gaming scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitudes of accelerations in various directions (usually on three axes) of the electronic device 100, and may detect a magnitude and a direction of gravity when the electronic device 100 is still. The acceleration sensor 180E may further be configured to identify a posture of the electronic device, and is applied to an application such as switching between a landscape mode and a portrait mode or a pedometer.

The distance sensor 180F is configured to measure a distance. The electronic device 100 may measure a distance in an infrared manner or a laser manner. In some embodiments, in a photographing scenario, the electronic device 100 may measure a distance by using the distance sensor 180F, to implement quick focusing.

The optical proximity sensor 180G may include, for example, a light emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally because of a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor 180K. The touch sensor may transfer the detected touch operation to the application processor to determine a type of the touch event. The display 194 may provide a visual output related to the touch operation. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal. In some embodiments, the bone conduction sensor 180M may alternatively be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may further be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 is compatible with different types of SIM cards. The SIM card interface 195 is also compatible with an external memory card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In embodiments of the present invention, an Android system of a layered architecture is used as an example to illustrate a software structure of the electronic device 100.

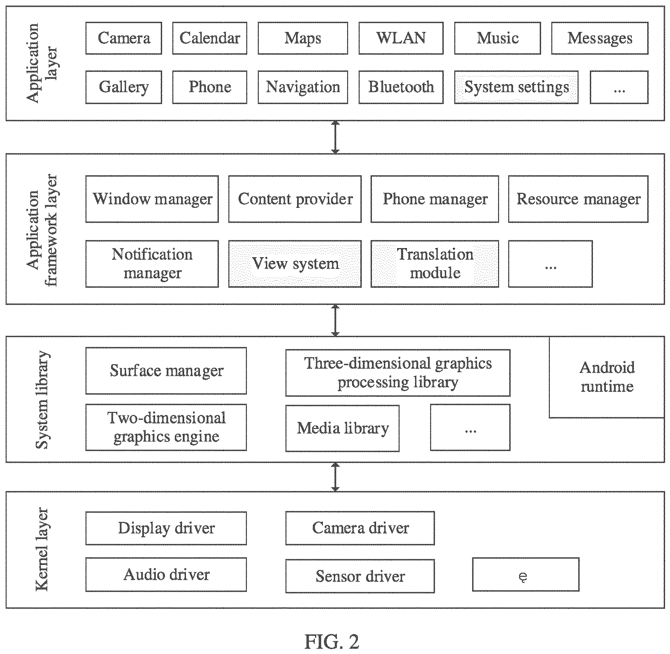

FIG. 2 is a block diagram of the software structure of the electronic device 100 according to embodiments of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a translation module, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history and a bookmark, a phone book, and the like.

The view system includes visual controls, such as a control for displaying a text and a control for displaying a picture. The view system may be configured to construct an application. A display interface may include one or more views. For example, a display interface including an SMS message notification icon may include a text display view and a picture display view.

The translation module includes a translation engine or an APK file that is stored locally in the system and is used to perform a translation function.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey notification type information. The displayed notification information may automatically disappear after a short pause and require no user interaction. For example, the notification manager is configured to notify download completion, give an information notification, and the like. The notification manager may alternatively be a notification that appears in a top status bar of the system in a form of a graph or a scroll bar text, for example, a notification of an application running on the background or a notification that appears on the screen in a form of a dialog window. For example, text information is prompted in the status bar, an alert sound is played, the electronic device vibrates, or the indicator light blinks.

The Android runtime includes a kernel library and a virtual machine. The Android runtime is responsible for scheduling and management of the Android system.

The kernel library includes two parts: a performance function that needs to be invoked in a Java language, and a kernel library of Android.

The application layer and the application framework layer run on the virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

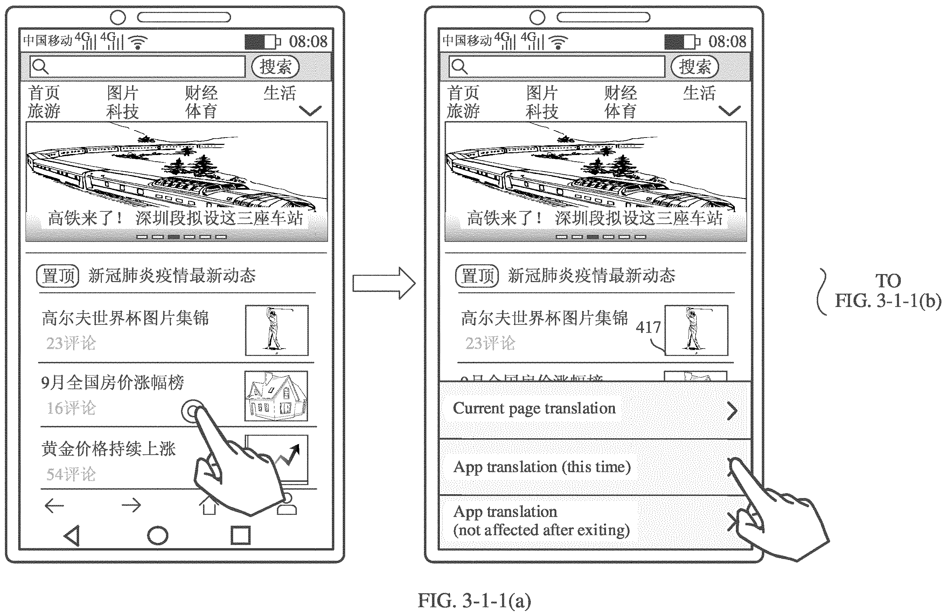

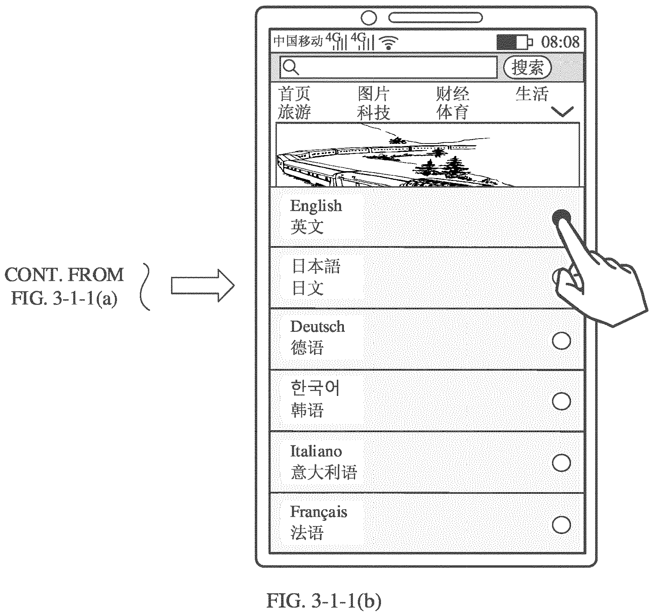

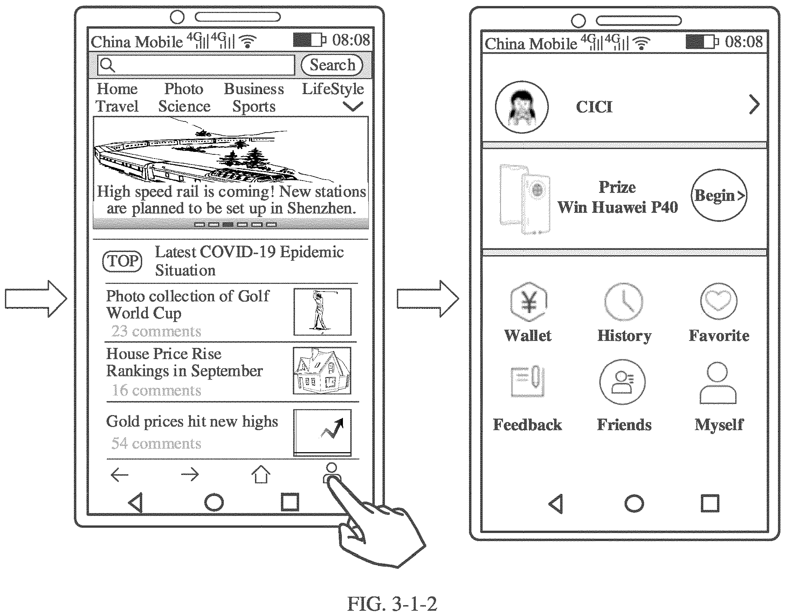

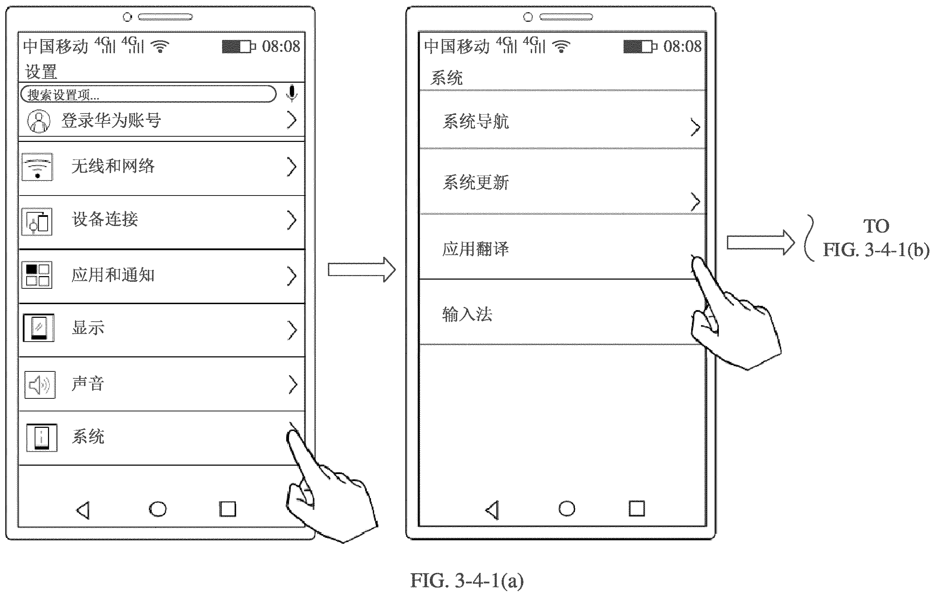

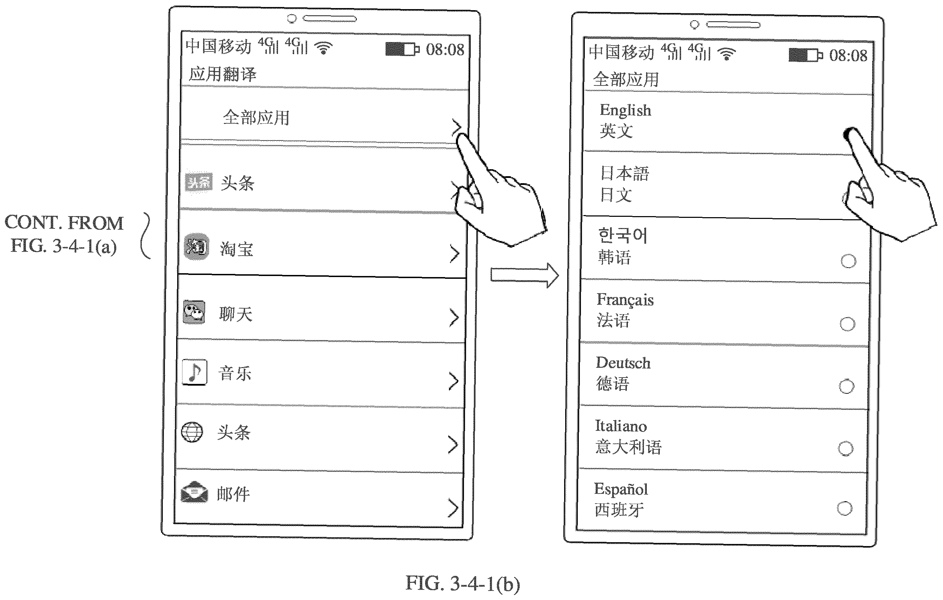

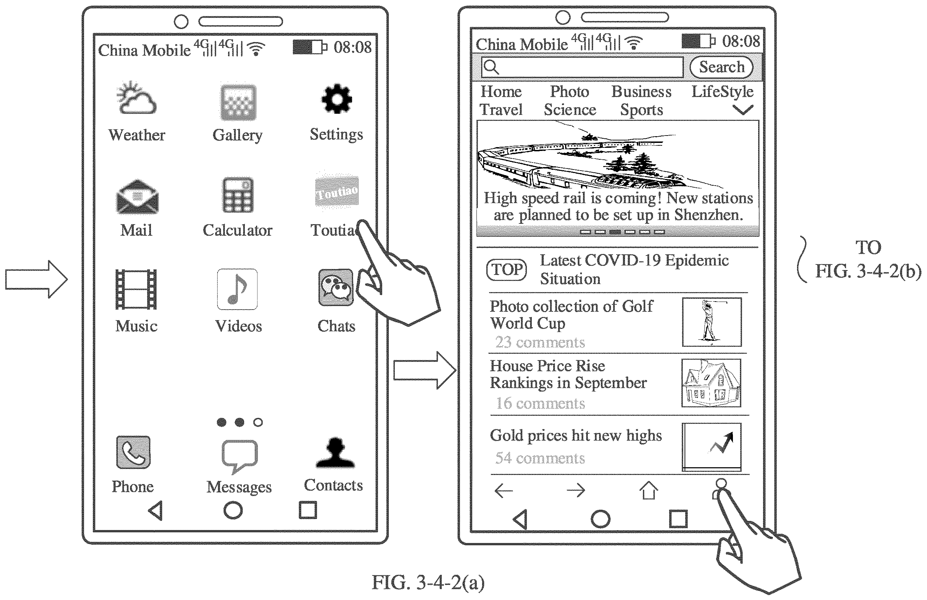

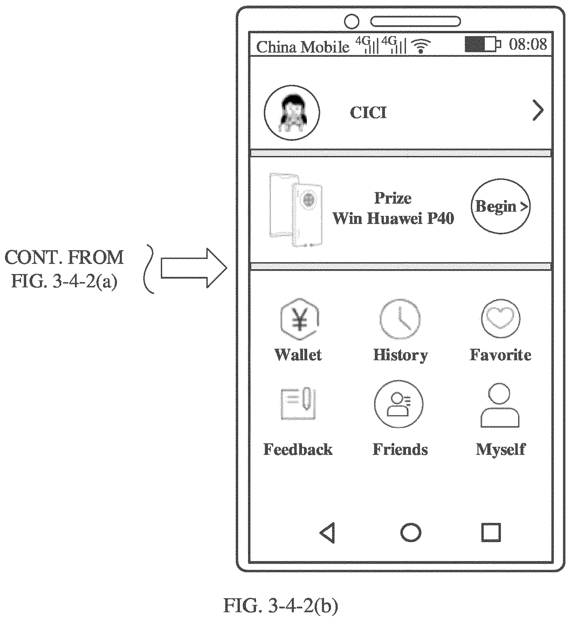

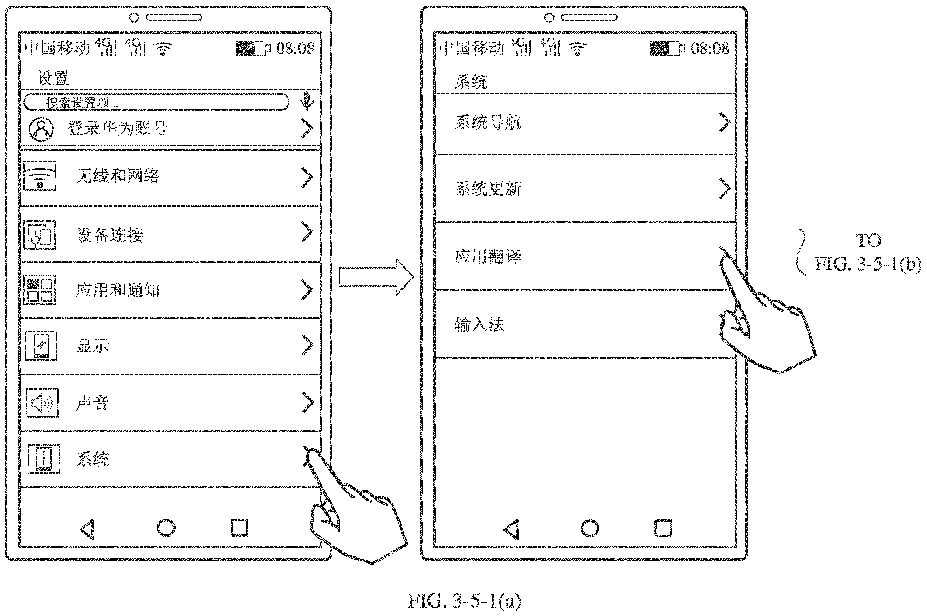

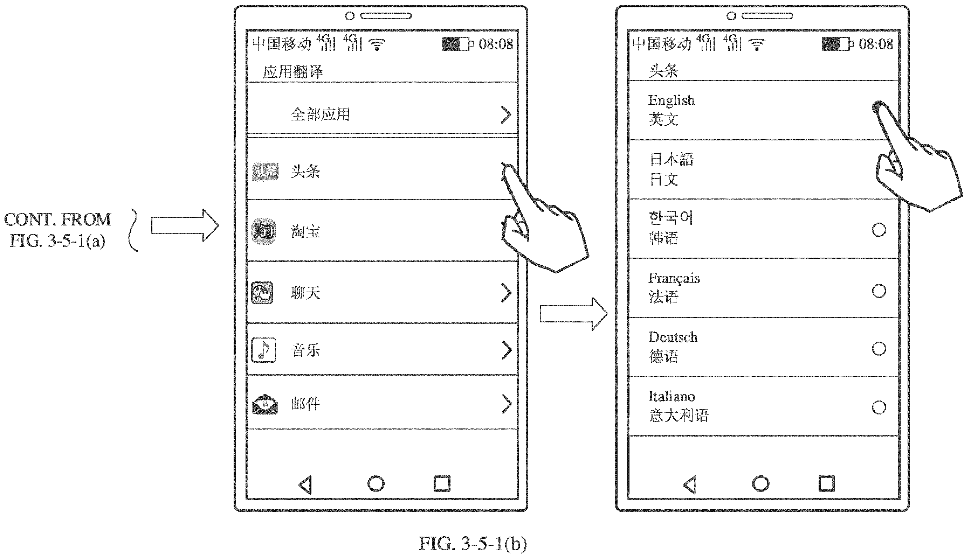

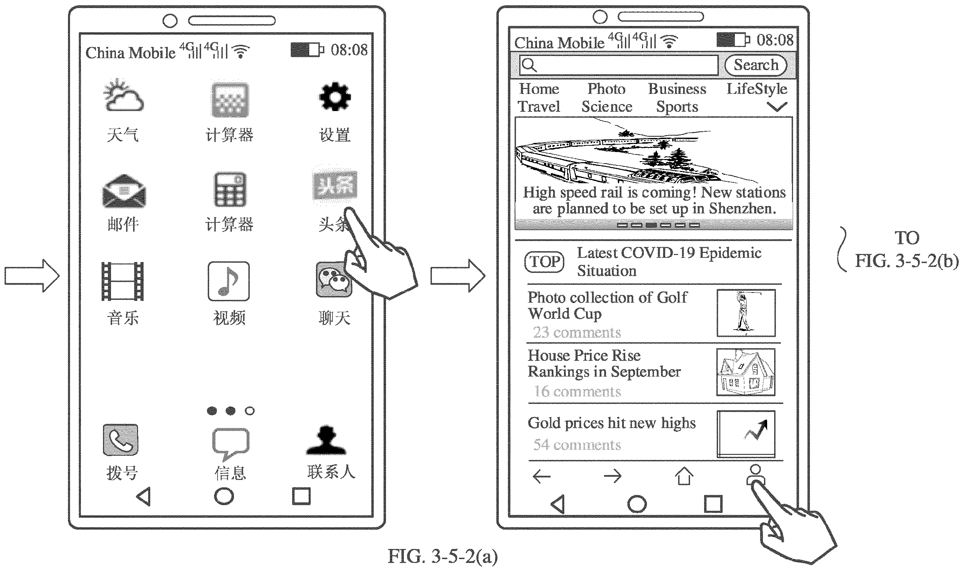

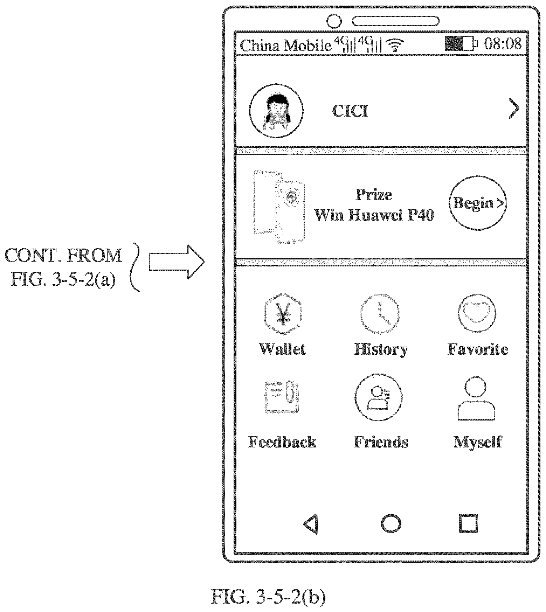

In some embodiments, as shown in FIG. 3-1-1(a) and FIG. 3-1-1(b), in S311, an electronic device displays a first interface of a first application. First text content and a first picture are displayed on the first interface, and the first picture includes second text content and first picture content. Both the first text content and the second text content are in Chinese. The first text content may be any text content (excluding a text displayed on a picture) on the first interface, and the first picture content may be any picture content on the first interface.

In this embodiment, in S312, the electronic device detects a preset gesture of a user on the first interface of the first application, and the electronic device displays a newly created second window. The second window displays interfaces of "Current page translation", "Application translation (this time)", and "Application translation (not affected after exiting)". The preset gesture may be touching some locations on a screen, touching and holding the screen, moving by pressing a preset graphic on the screen, or the like. In some embodiments, the second window may be displayed floatingly on an original application window, or displayed on a side of the display (including four sides), or in the middle.

In this embodiment, in S313: after the user may select "Application translation (this time)", a language list is displayed, and a target language for executing a translation function is selected for the application in the language list.

In this embodiment, as shown in FIG. 3-1-2, in S314: after the user completes setting, a system detects that the user enables the translation function, and the electronic device displays a second interface of the first application. Third text content and a second picture are displayed on the second interface. The second picture includes fourth text content and the first picture content. The third text content is a translation result corresponding to the first text content, and the fourth text content is a translation result corresponding to the third text content. Both the third text content and the fourth text content are in the target language.

In this embodiment, in S315, the user may directly tap a user profile picture on the second interface, and the electronic device displays a third interface of the first application. Fifth text content and a third picture are displayed on the third interface. The third picture includes sixth text content and third picture content. Both the fifth text content and the sixth text content are in the target language. The fifth text content may be any text content (excluding a text displayed on a picture) on the third interface, and the third picture content may be any picture content on the third interface. Because the user selects "Application translation (this time)", and the first application does not exit, the electronic device translates text content on a plurality of interfaces in the first application. After the user switches the first application to a new third interface, the electronic device directly translates the content on the third interface, and translated text content is displayed.

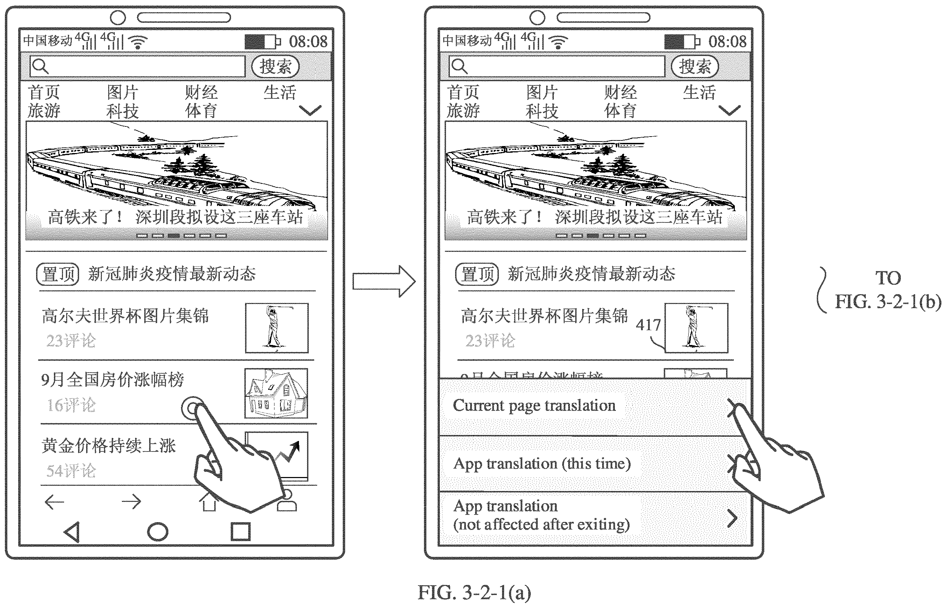

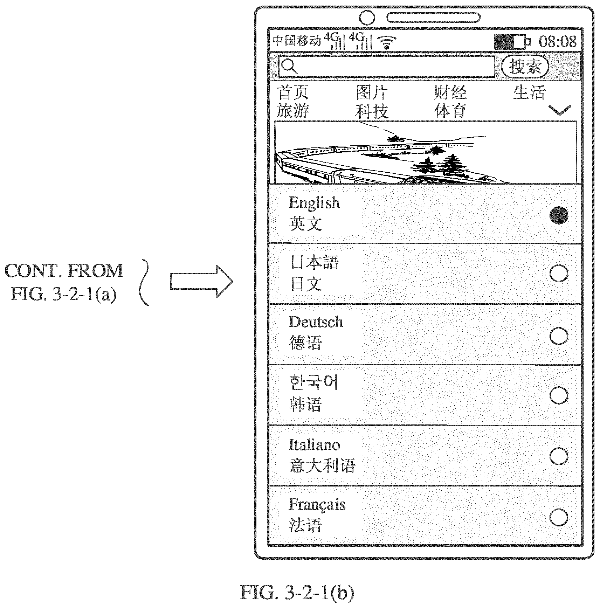

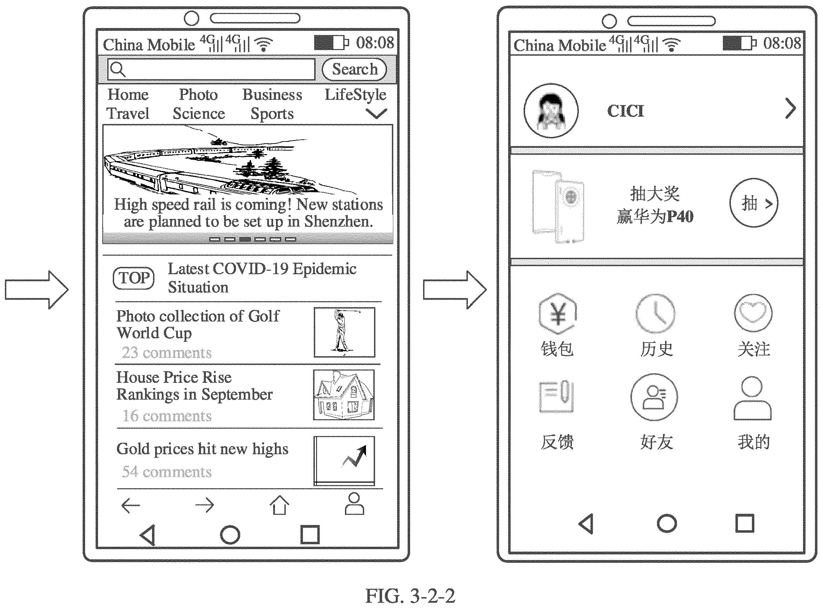

In some embodiments, as shown in FIG. 3-2-1(a) and FIG. 3-2-1(b), steps S321 and S322 in this embodiment are the same as steps S311 and S312 in the foregoing embodiment. Details are not described herein again.

In this embodiment, in S323: after the user may select "Current page translation", a language list is displayed, and a target language for executing a translation function is selected for the application in the language list.

In this embodiment, as shown in FIG. 3-2-2, step S324 in this embodiment is the same as step S314 in the foregoing embodiment. Details are not described herein again.

In this embodiment, in S325, the user may directly tap a user profile picture on the second interface, and the electronic device displays a third interface of the first application. Fifth text content and a third picture are displayed on the third interface. The third picture includes sixth text content and third picture content. Both the fifth text content and the sixth text content are in an original language. The fifth text content may be any text content (excluding a text displayed on a picture) on the third interface, and the third picture content may be any picture content on the third interface. Because the user selects "Current page translation", the electronic device translates the text content on the first interface. The first interface is an interface on which the user triggers the translation function by using the preset gesture. After the user switches the first application to a new third interface, the electronic device does not translate the content on the third interface.

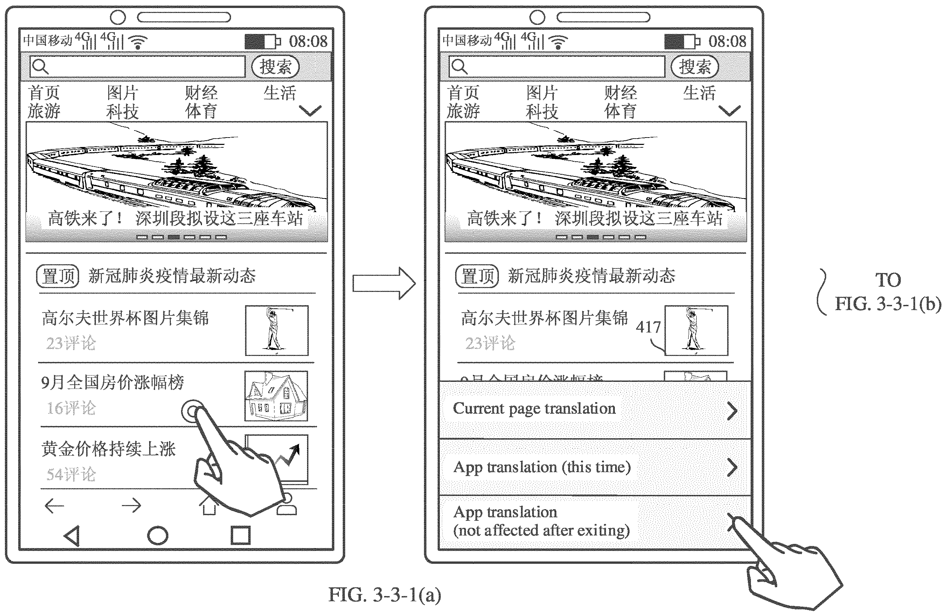

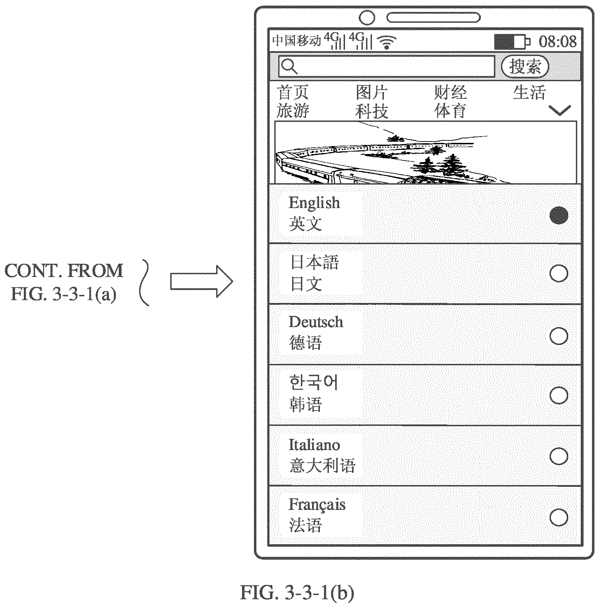

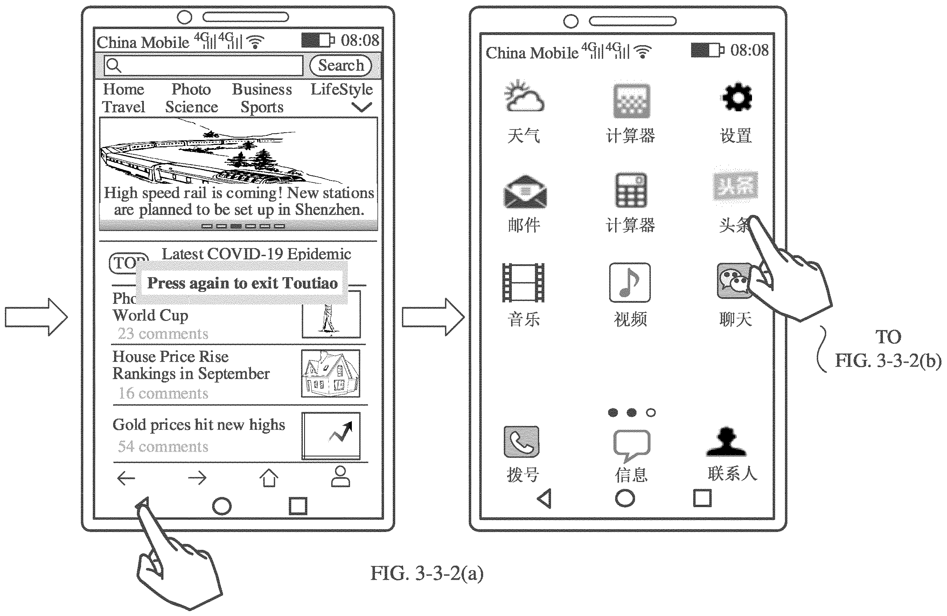

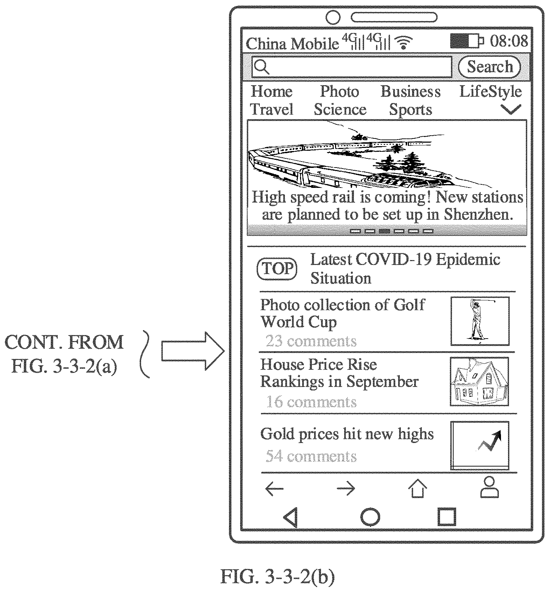

In some embodiments, as shown in FIG. 3-3-1(a) and FIG. 3-3-1(b), steps S331 and S332 in this embodiment are the same as steps S311 and S312 in the foregoing embodiment. Details are not described herein again.

In this embodiment, in S333: after the user may select "Application translation (not affected after exiting)", a language list is displayed, and a target language for executing a translation function is selected for the application in the language list.

In this embodiment, as shown in FIG. 3-3-2(a) and FIG. 3-3-2(b), step S334 in this embodiment is the same as step S314 in the foregoing embodiment. Details are not described herein again.

In this embodiment, in S335, the user double-taps a back button of a system to exit the current application, and the electronic device displays a third interface. The third interface is a home screen of the electronic device. Fifth text content and a third picture are displayed on the third interface, and the third picture includes sixth text content and third picture content. Both the fifth text content and the sixth text content are in an original language. The fifth text content may be any text content (excluding a text displayed on a picture) on the third interface, and the third picture content may be any picture content on the third interface.

In this embodiment, in S336, the user selects an icon of the first application (Toutiao), and the electronic device displays a fourth interface. The fourth interface is a home page of the first application. Seventh text content and a fourth picture are displayed on the fourth interface, and the fourth picture includes eighth text content and fourth picture content. Both the seventh text content and the eighth text content are in a target language. Because the user selects "Application translation (not affected after exiting)", exiting the first application does not disable the translation function of the first application. The electronic device translates text content on a plurality of interfaces in the first application. After the user reopens the first application, the electronic device translates the home page of the first application, and translated text content is displayed.

In some embodiments, after the user chooses to enable the translation function of the application in the second window, after the electronic device receives the information, the electronic device enables the translation function. In some embodiments, after the user selects the "Current page translation" function, the electronic device disables the translation function based on a preset triggering operation. For example, when an operation such as turning a page, sliding down, or clicking a link by the user is received, the electronic device disables the translation function. In addition, translation is not performed on a user interface subsequently displayed by the first application. In some embodiments, after the user selects the "Application translation (this time)" function, after the electronic device receives an operation instruction that the user exits the first application, the electronic device disables the translation function, and does not perform translation on an interface in the first application that is opened next time.

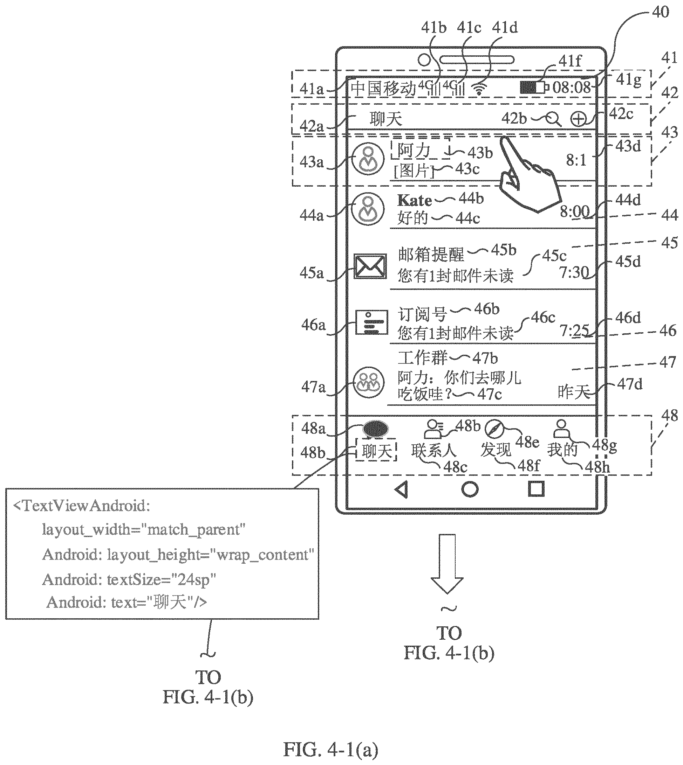

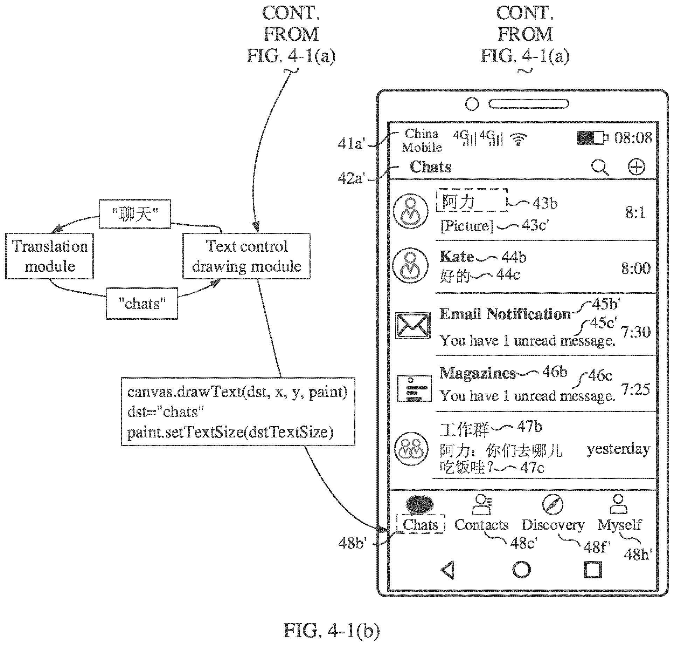

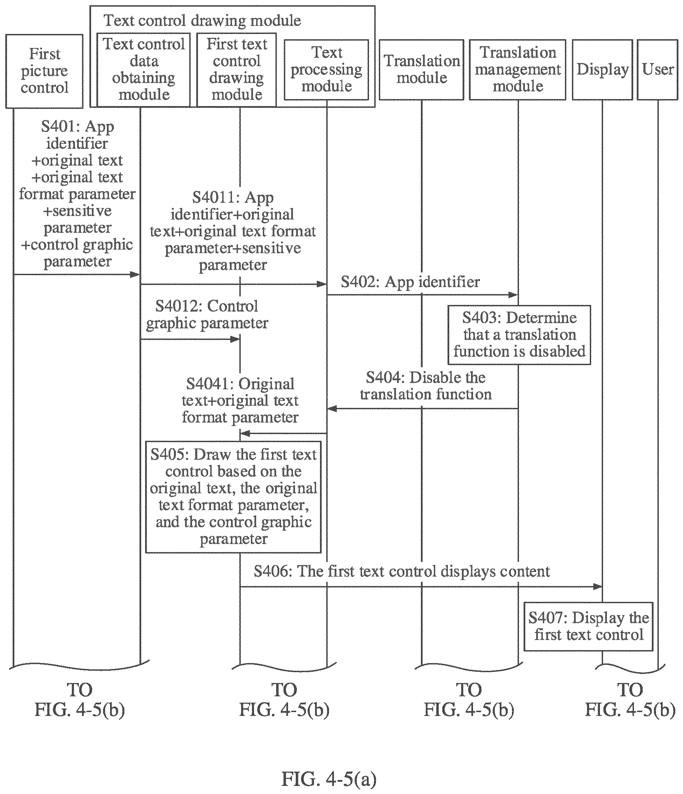

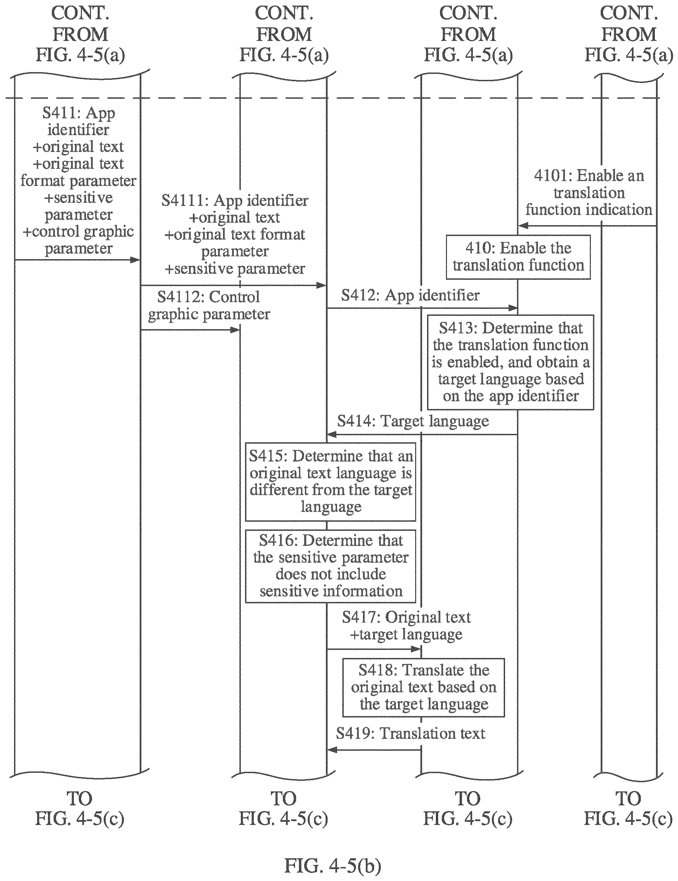

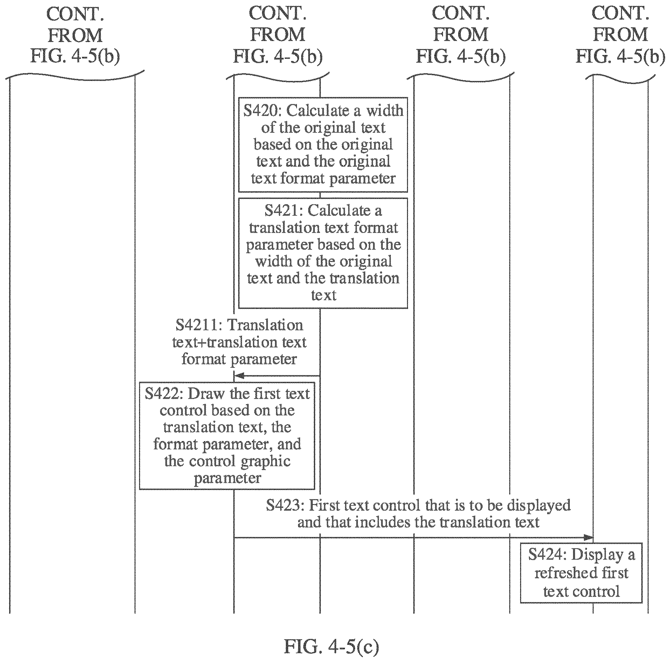

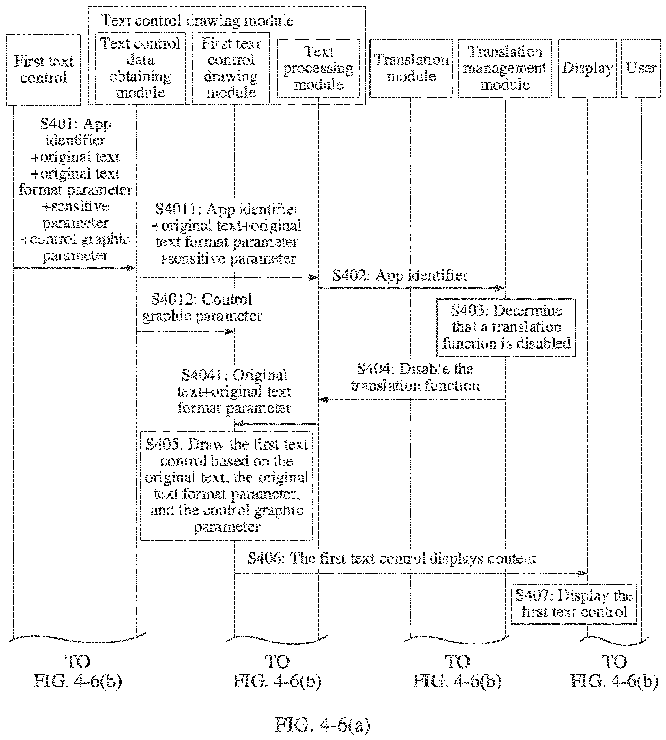

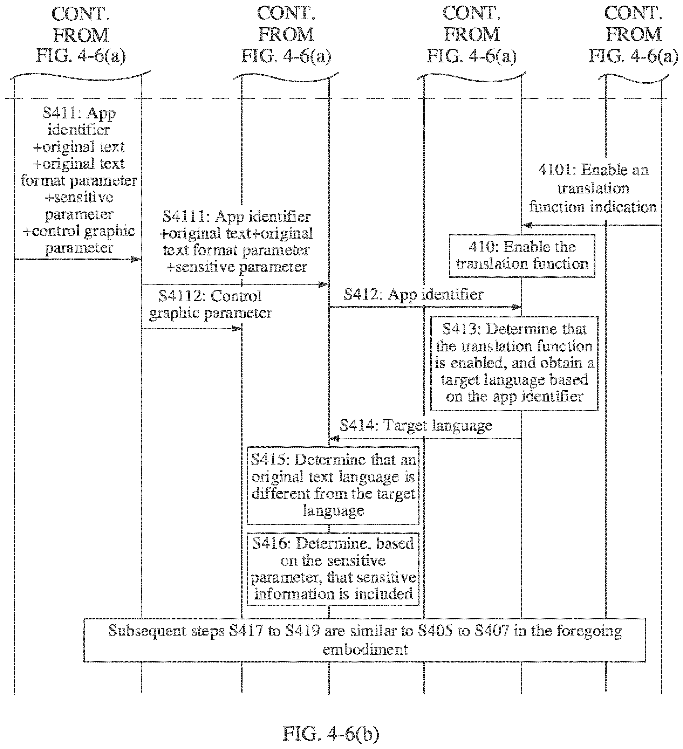

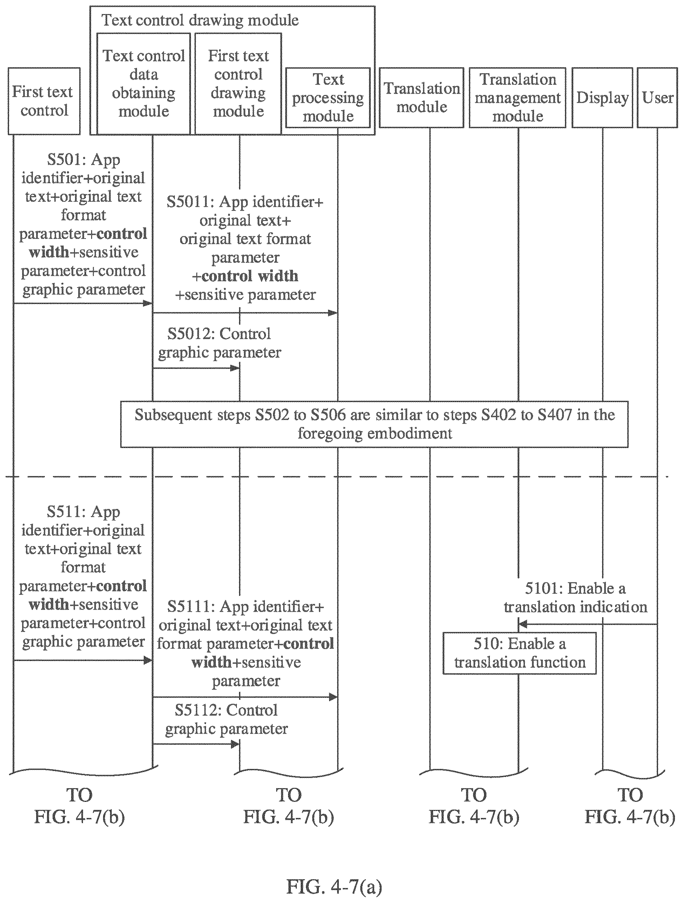

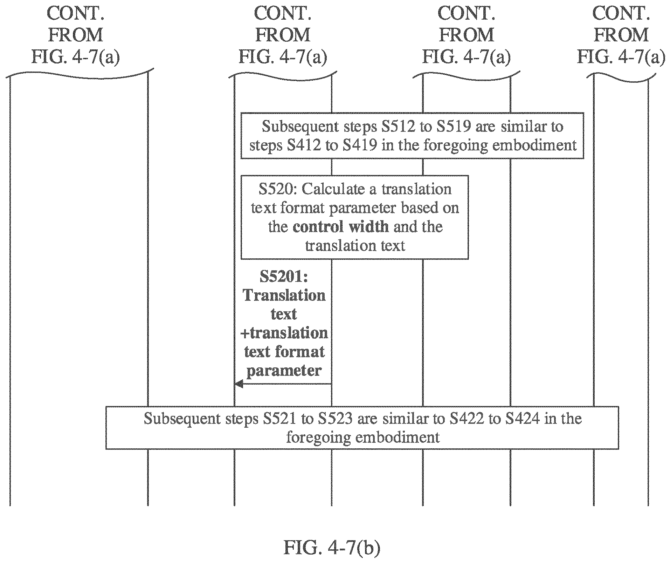

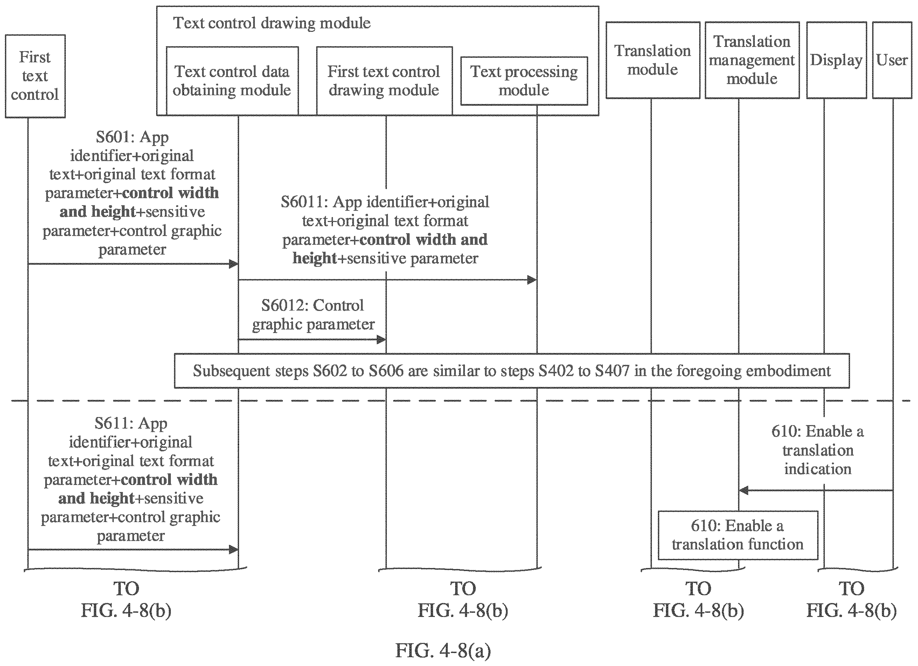

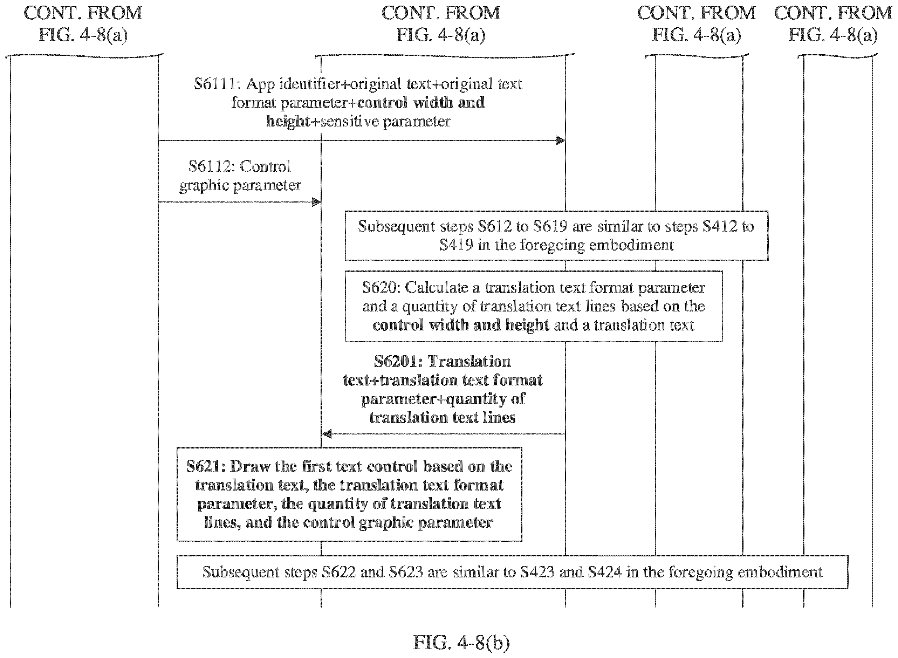

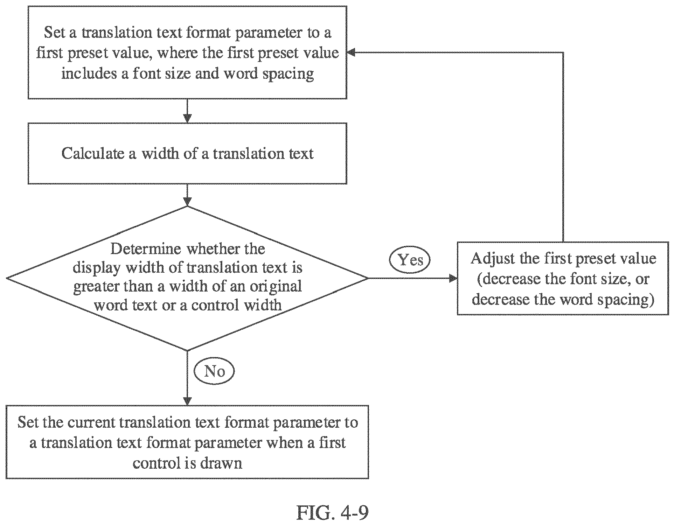

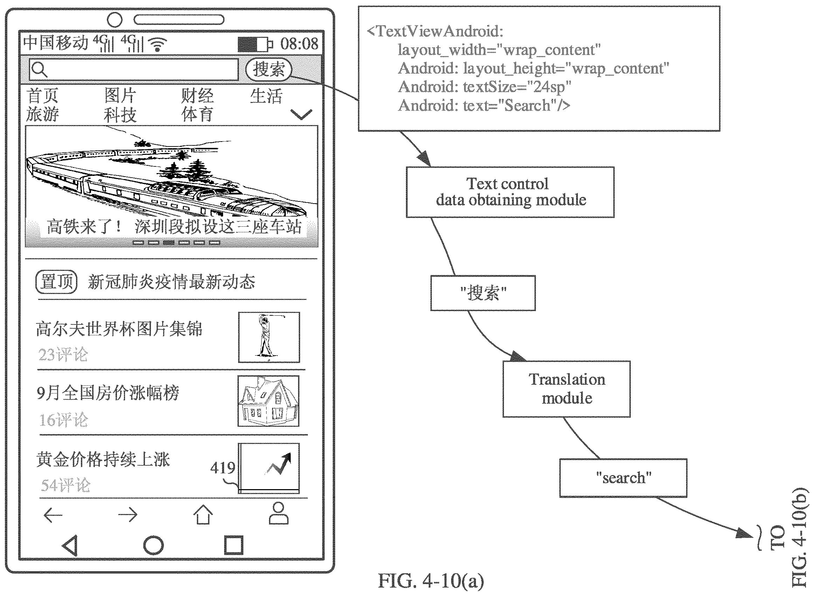

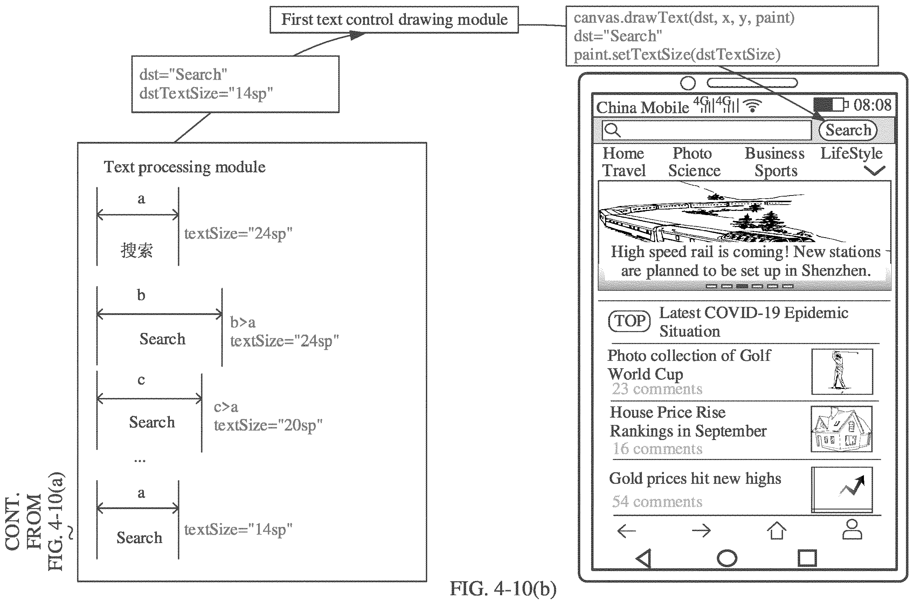

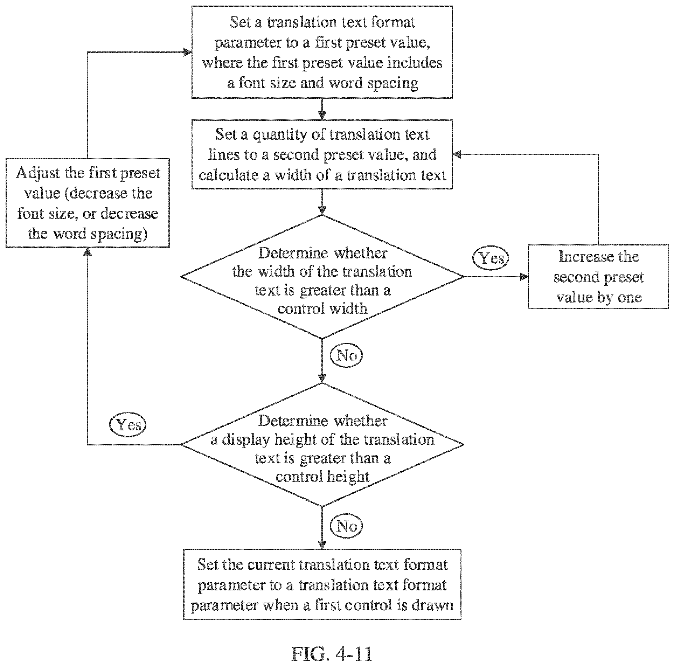

In some embodiments, as shown in FIG. 3-4-1(a) and FIG. 3-4-1(b), in S341, a user opens a system setting interface of an electronic device, and the user may select an "Application translation" menu in a system to set a translation function of an application.

S342: An application list is displayed on an interface of the electronic device. The application list includes "All applications" and an icon of each application. The user selects "All applications", a language list is displayed on the interface of the electronic device, and a target language for executing a translation function for the application is selected from the language list. In some embodiments, the all applications are all applications of the electronic device, including a home screen program of the electronic device.

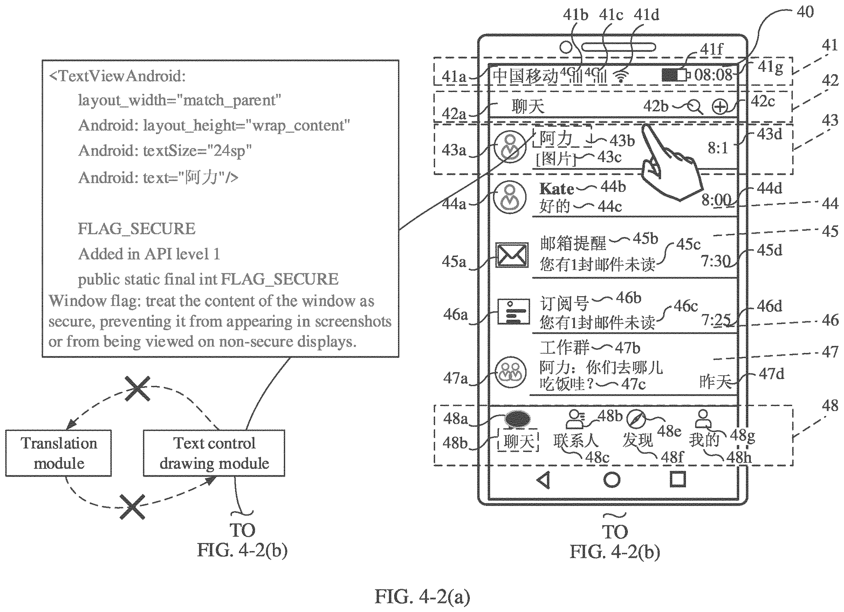

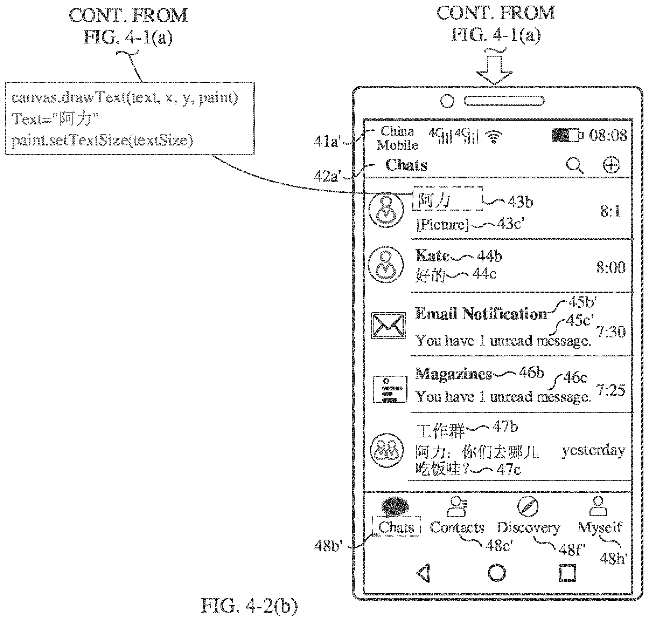

In this embodiment, in S343, as shown in FIG. 3-4-2(a) and FIG. 3-4-2(b), the user taps a return home screen of the system, and the electronic device displays a first interface. The first interface is the home screen of the electronic device. First text content and a first picture are displayed on the first interface, and the first picture includes second text content and first picture content. Both the first text content and the second text content are in a target language. Because the user selects "All applications", the electronic device translates the text content on the home screen, and displays translated text content. The first text content may be any text content (excluding a text displayed on a picture) on the first interface, and the first picture content may be any picture content on the first interface.

In this embodiment, in S344, the user selects an icon of the first application (Toutiao), the electronic device displays a second interface. The second interface is a home page of the first application. Third text content and a second picture are displayed on the second interface, and the second picture includes fourth text content and second picture content. Both the third text content and the fourth text content are in the target language. Because the user enables the translation function of "All applications", the electronic device translates text content on a plurality of interfaces in the first application. After the user opens the first application, the electronic device translates the home page of the first application, and displays translated text content.

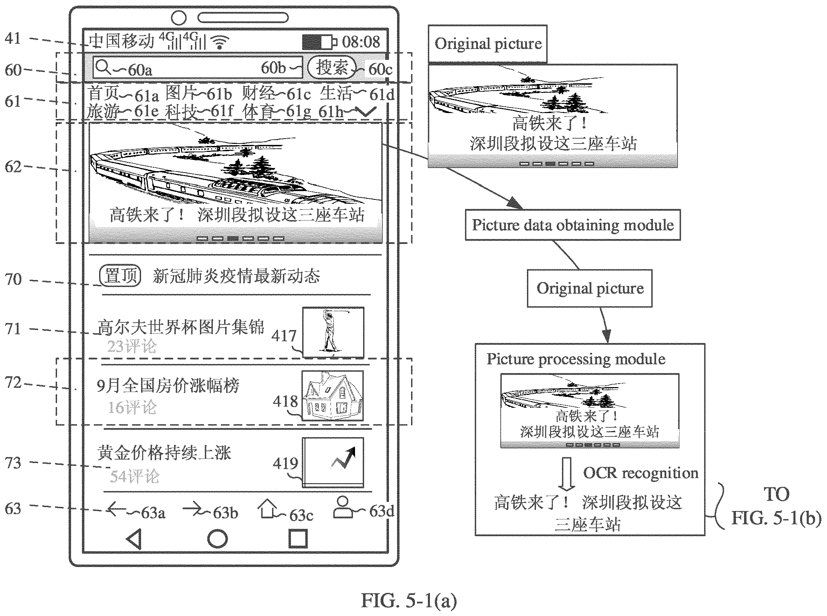

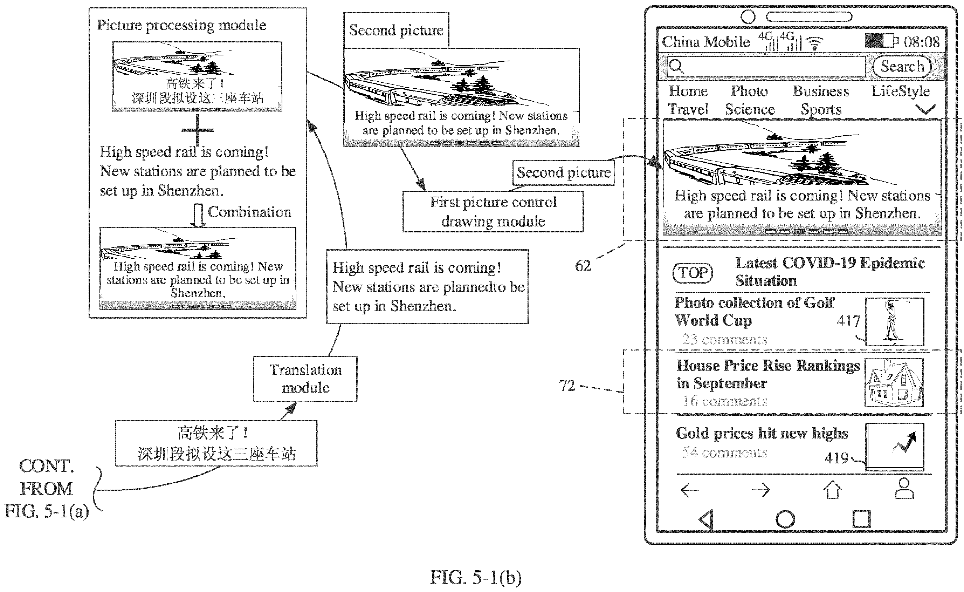

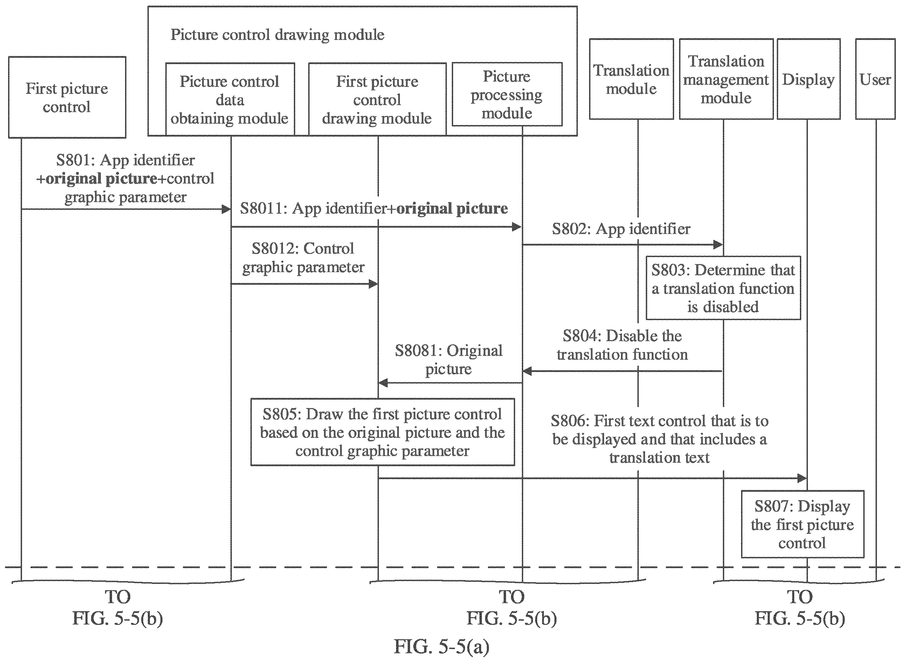

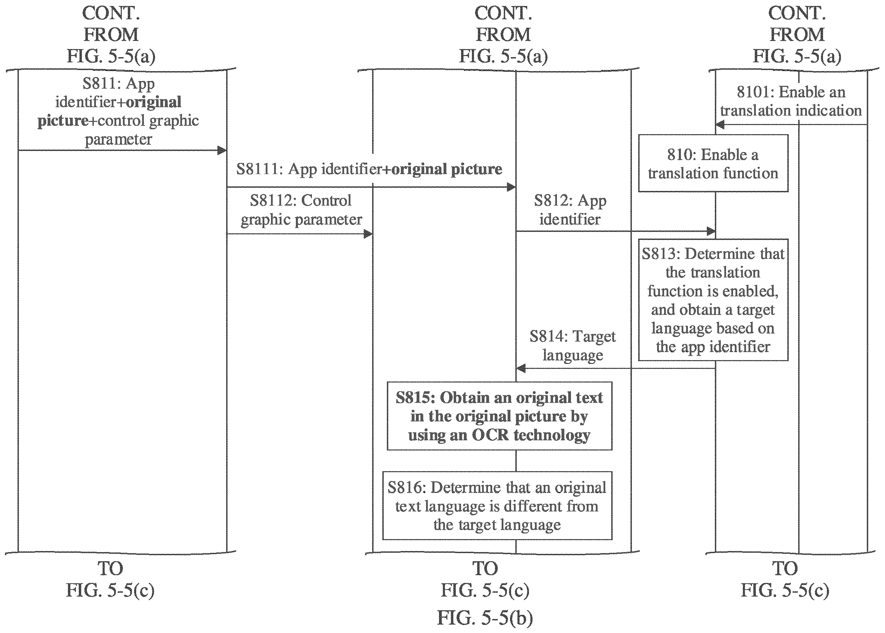

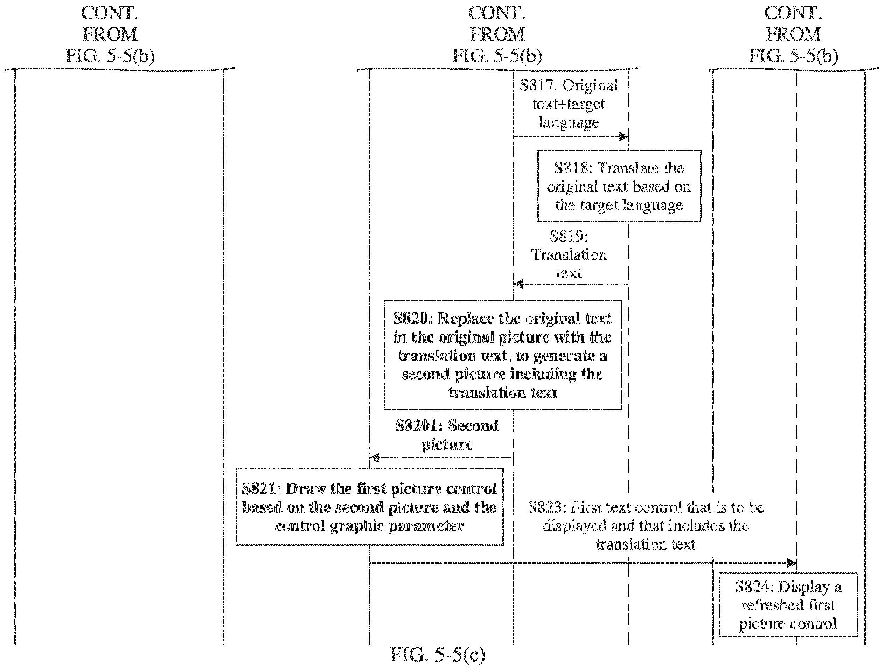

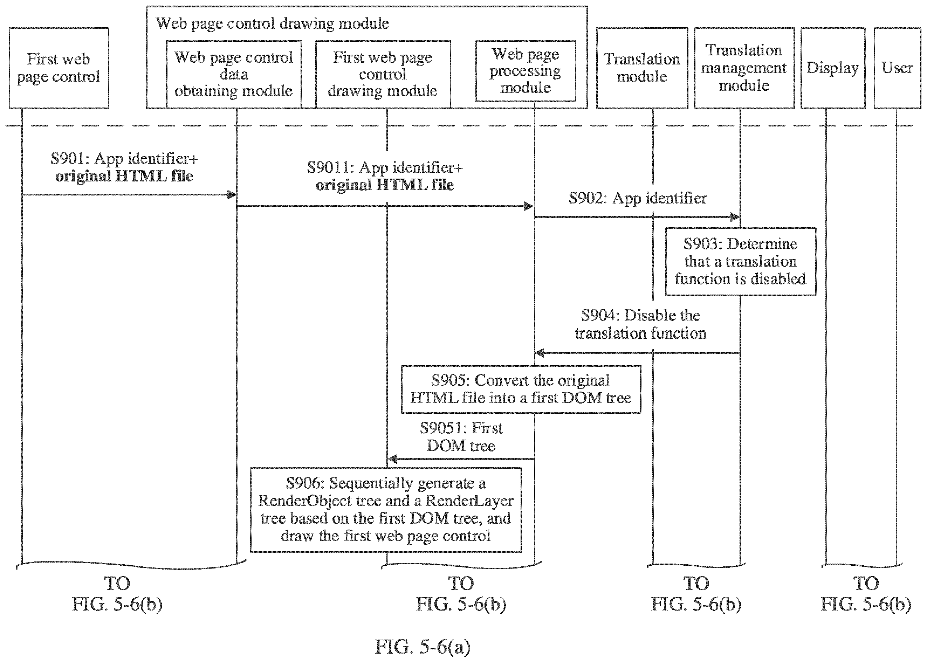

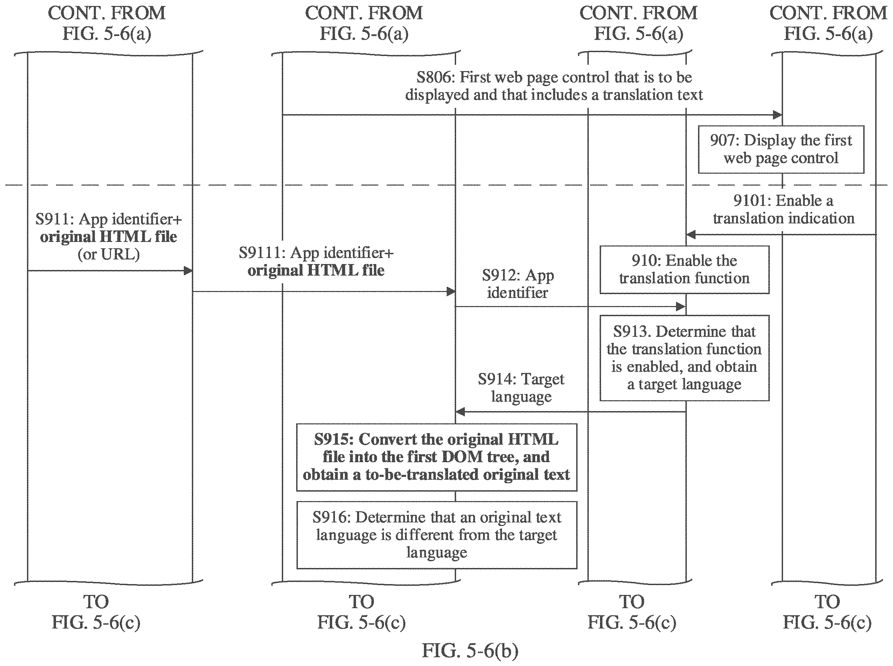

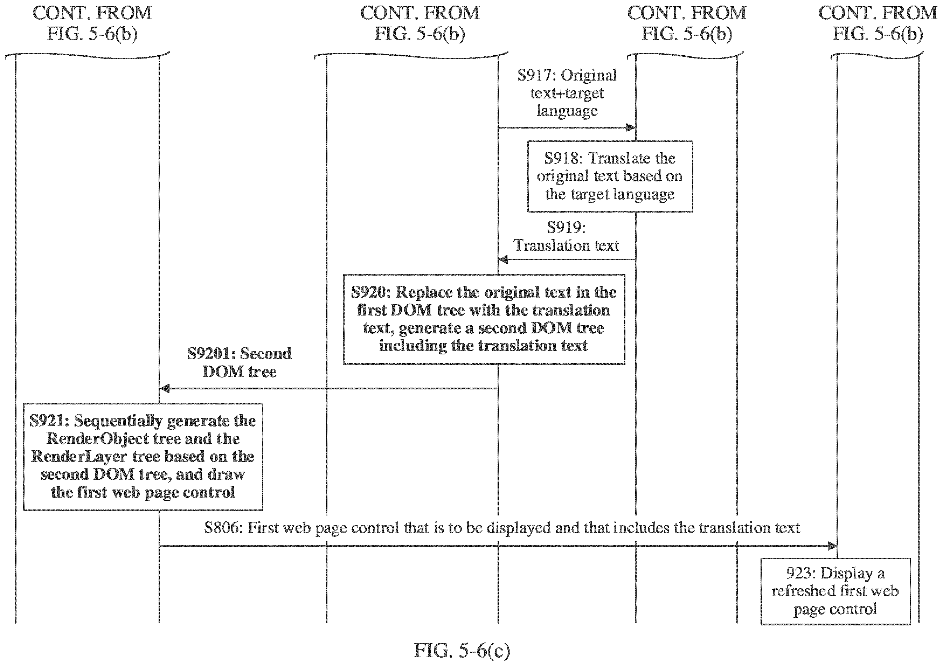

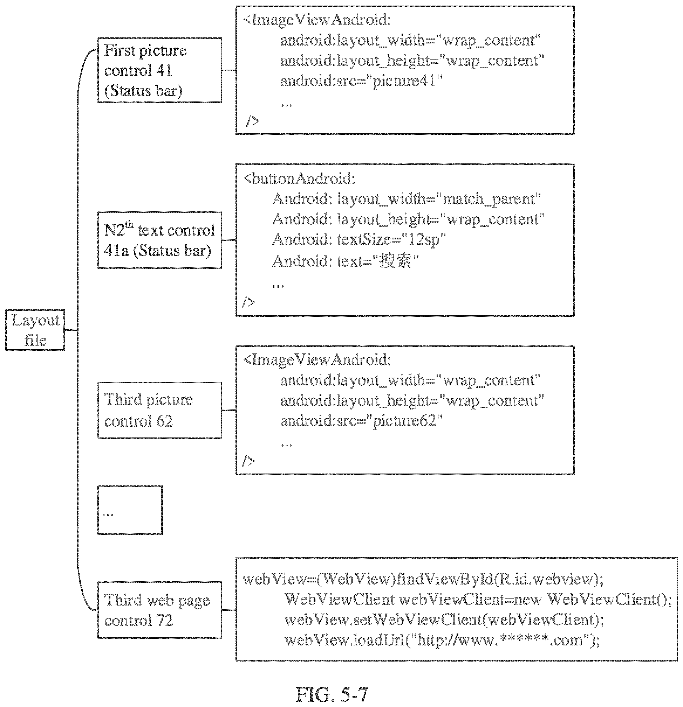

In some embodiments, as shown in FIG. 3-5-1(a) and FIG. 3-5-1(b), step S351 in this embodiment is the same as step S341 in the foregoing embodiment. Details are not described herein again.

S352: An application list is displayed on an interface of the electronic device. The application list includes "All applications" and an icon of each application. The user selects a first application "Toutiao", a language list is displayed on the interface of the electronic device, and a target language for executing a translation function for the application is selected from the language list.

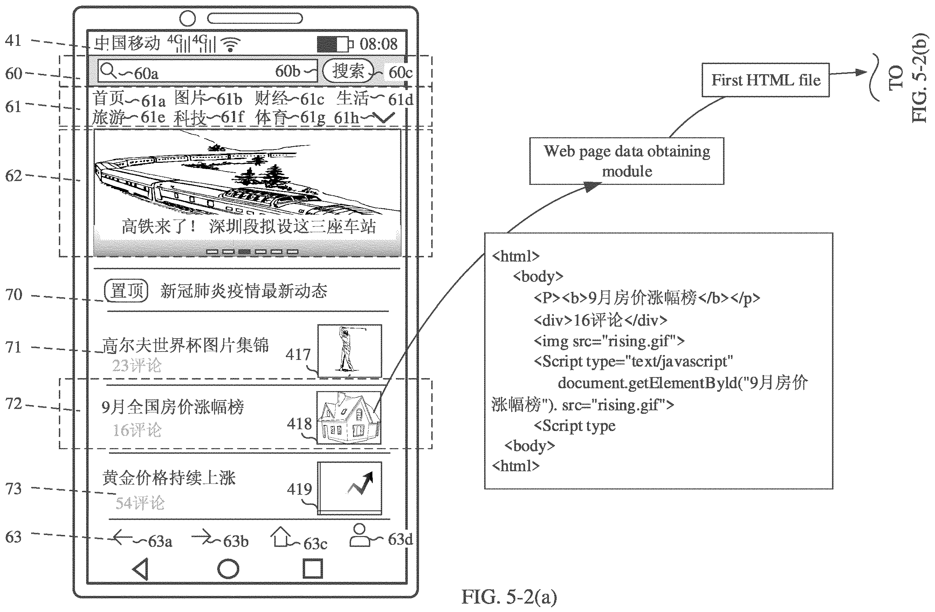

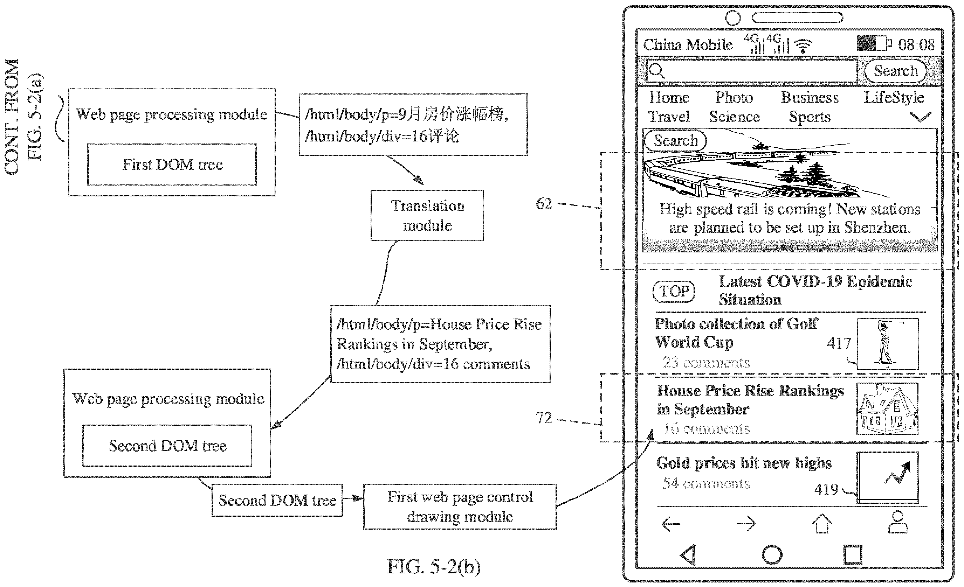

In this embodiment, in S353, as shown in FIG. 3-5-2(a) and FIG. 3-5-2(b), the user taps a return home screen of a system, and the electronic device displays a first interface. The first interface is the home screen of the electronic device. First text content and a first picture are displayed on the first interface, and the first picture includes second text content and first picture content. Both the first text content and the second text content are in an original language.

In this embodiment, in S354, the user selects an icon of the first application (Toutiao), the electronic device displays a second interface. The second interface is a home page of the first application. Third text content and a second picture are displayed on the second interface, and the second picture includes fourth text content and second picture content. Both the third text content and the fourth text content are in the target language. Because the user enables the translation function of the first application "Toutiao", the electronic device translates text content on a plurality of interfaces in the first application. After the user opens the first application, the electronic device translates the home page of the first application, and displays translated text content.

In some embodiments, after the user selects the target language of the application from the language list, it may be considered that the translation function of the application is enabled.

In some embodiments, refer to FIG. 4-1(a) and FIG. 4-1(b) and FIG. 4-5(a) to FIG. 4-5(c).

S401: A text control drawing module obtains first information of a first text control from a first application. The first information includes an application identifier, an original text of the first text control, an original text format parameter of the first text control, a sensitive parameter of the first text control, and a control graphic parameter of the first text control.

In some embodiments, the format parameter includes one or more of the following: a format parameter, a font size parameter, a word spacing parameter, and a line spacing parameter, and a parameter of a quantity of words per line, and a parameter of a quantity of lines.

In some embodiments, the text control drawing module includes a text control data obtaining module, a first text control drawing module, and a text processing module. The text control drawing module obtains, from an application, a parameter required for drawing a text control by invoking an ondraw() program interface in a view system, and implements refreshing display of the text control based on the parameter.

In some embodiments, the electronic device periodically triggers refreshing and drawing of an application interface based on a refresh frequency (for example, 60 fps, that is, refreshing 60 times per second). The text control drawing periodically obtains the first information of the first text control from the first application.

In some embodiments, as shown in FIG. 4-1(a) and FIG. 4-1(b), an interface of the first application is a window (window) 40, and the window 40 includes a first picture control 41, a second picture control 42, a third picture control 43, a fourth picture control 44, a fifth picture control 45, a sixth picture control 46, a seventh picture control 47, and an eighth picture control 48.

The first picture control 41 includes: a text control 41a used to display an operator of a mobile communication signal, a picture control 41b used to display a mobile communication signal, a picture control 41c used to display a mobile communication signal, a picture control 41d used to display a wireless grid signal, a picture control 41f used to display a battery status, and a picture control 41g for a current time.

The second picture control 42 includes: a text control 42a used to display an identifier of the current application, a picture control 42b used to display searching, and a picture control 42c used to display adding.

The third picture control 43 includes: a picture control 43a used to display a profile picture of a chat object of a current dialog, a text control 43b used to display a name identifier of the current chat object, a text control 43c used to display chat information, and a text control 43d used to display an information sending time.

Control content of the fourth picture control 44, the fifth picture control 45, the sixth picture control 46, and the seventh picture control 47 is similar to that of the third picture control 43. Details are not described herein again. In this embodiment, 44c and 47c display chat information content, and 43c, 45c and 46c each display a chat information type or reminder information.

The eighth picture control 48 includes: a picture control 48a used to display a chat interface identifier, a text control 48b used to display "Chats", a picture control 48a used to display a contact interface identifier, a text control 48c used to display "Contacts", a picture control 48a used to display a discovery interface identifier, a text control 48b used to display "Discover", a picture control 48a used to display a my settings interface identifier, and a text control 48c used to display "Me".

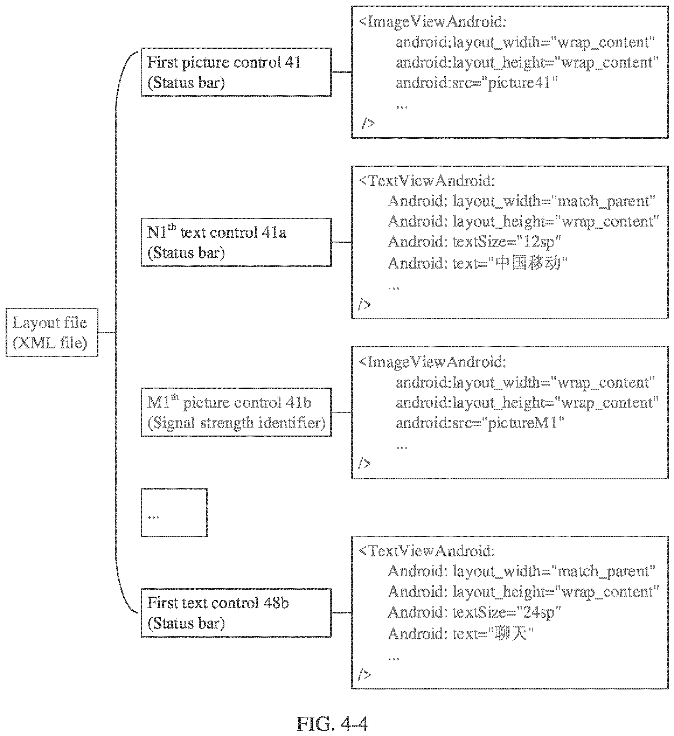

In some embodiments, the displayed content of the controls on the interface of the first application is stored in an XML (Extensible Markup Language, extensible markup language) file. As shown in FIG. 4-4, the layout file includes layout content of a plurality of controls, and the plurality of controls are displayed on a first interface that displays the first application. An XML file of a text control includes: a size of the text control (android:layout_width="wrap_content"; android:layout_height="wrap_content"), content displaying text (Android: text="China Mobile"), a format parameter displaying text (Android: text="China Mobile"), and the like. An XML file of a picture control includes a size of the image control (android:layout_width="wrap_content"; android:layout_height="wrap_content"), content displaying a picture (android:src="picture41"), and the like.

An XML file of an application is program code formed by a developer when designing an application interface. The developer can select a view provided by an Android system or a self-developed view to form content to be displayed in an application. In some embodiments, the view may be classified into a system view and a third-party view based on a provider. The system view is provided by the Android system and can be used by every developer when designing a user interface. The third-party view is provided by an application developer. Usually, the electronic device may identify, from a type name of a view, whether the view belongs to a system view or a third-party view. For example, a type name of the system view may be "android.widget.Textview", and a prefix of the type name of the system view is "android". A type name of the third-party view may be "com.sina.weibo.feed.view.MBlogListItemButtonsView", and a prefix of the type name of the third-party view is a name of the application, for example, "com.sina.weibo".

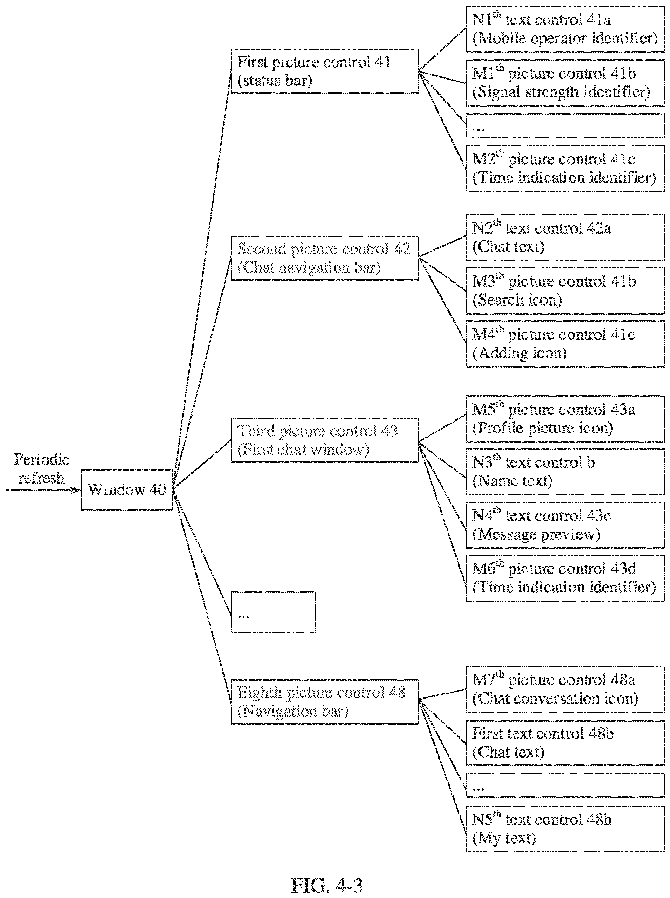

As shown in FIG. 4-3, in some embodiments, a relationship between controls may be parsed out based on the XML file, and each node in the XML file correspondingly describes one control. In the XML file, if a node has an upper-level node, the upper-level node of the node is a parent node of the node. The node is a child node of the upper-level node. The control is an interface element displayed after an XML file included in the node is drawn.

During interface drawing, control content is drawn based on an XML file of each control, and a to-be-displayed user interface is nested based on a parent-child relationship between the controls. After an application interface drawing process is completed, the electronic device may obtain a to-be-displayed application window interface that includes all to-be-displayed controls.

In some embodiments, the first text control includes a native Android control (excluding a webview) that can be used to display text content, and the first control includes a buttonview, a listview, a textview, and the like.

In some embodiments, the text control data obtaining module obtains an XML file of the first text control from the application, and obtains the application identifier, the original text of the first text control, the original text format parameter of the first text control, and the sensitive parameter of the first text control, and the control graphic parameter of the first text control by using the XML file.

In some embodiments, the text control data obtaining module obtains an XmlResourceParser object by using an XML original file obtained by using getResources().getXml() (or by using another similar instruction), and after parsing an XML attribute, the text control data obtaining module obtains content of an XML file of each control.

As shown in FIG. 4-4, in this embodiment, the following is a part of an XML file of the first text control 48b.

```
           < TextView
                     Android: layout_width="match_parent"
                     Android: layout_height="wrap_content"
                     Android: textSize="24sp"
                     Android: text="WeChat"/>
```

In some embodiments, the original text "Wechat" may be obtained by using String src=text, the original text format parameter may be obtained by using int weight=paint.measureText(src), a secure_flag sensitive parameter may be obtained by using LayoutParams params=this.getLayoutParams(), and the application identifier may be obtained by analyzing the XML file.

S4011: The text control data obtaining module sends the application identifier, the original text of the first text control, the original text format parameter of the first text control, and the sensitive parameter of the first text control to the text processing module.

S4012: The text control data obtaining module sends the control graphic parameter to the first text control drawing module.

S402: A text control module sends the application identifier to a translation management module.

S403: The translation management module determines, based on the application identifier, whether the first application enables a translation function. In this embodiment, the translation function of the first application is disabled.

S404: The translation module sends, to the text processing module, information that the translation function is disabled.

S4041: The text processing module obtains the information that the translation function is disabled, and sends the original text and the original text format parameter to the first text control drawing module.

S405: The first text control drawing module draws the first text control based on the original text, the original text format, and the control graphic parameter. In some embodiments, the first text control drawing module may draw text content in the first text control by using canvas.drawText(Text, x, y, paint).

S406: The first text control drawing module sends to-be-displayed content of the first text control to a display. In some embodiments, the to-be-displayed user interface is an interface visible to a user after being rendered, and a system library, for example, a font library, a three-dimensional graphics processing library, a two-dimensional graphics processing library, a surface manager, or a picture library, is used during rendering.

S407: The display displays the first text control. A GPU (graphics processing unit, GPU) of the electronic device processes the drawn to-be-displayed interface including the first text control into a multidimensional graphic, texturizes the graphic, rasterizes (a process of converting the graphic into a series of pixels is referred to as rasterization) the graphic, and projects the rasterized graphic on the display. In this way, the user interface visible to the user can be obtained.

S4101: The translation management module receives an indication for enabling a translation function. The indication of the translation function may enable the translation function in a manner such as S313, S323, S333, S342, or S352 described in the foregoing embodiment.

S410: The translation management module receives the indication for enabling the translation function, and stores related information of enabling the translation function and the target language.

S411: The text control drawing module obtains second information of the first text control from the first application. The first information includes the application identifier, the original text of the first text control, the original text format parameter of the first text control, the sensitive parameter of the first text control, and the control graphic parameter of the first text control. In some embodiments, because the text control drawing module uses a periodic refresh mechanism, the second information and the first information may include same information or different information. In this embodiment, the second information and the first information include same information.

S4111: The text control data obtaining module sends the application identifier, the original text of the first text control, the original text format parameter of the first text control, and the sensitive parameter of the first text control to the text processing module.

S4112: The text control data obtaining module sends the control graphic parameter to the first text control drawing module.

S412: The text control module sends the application identifier to the translation management module.

S413: The translation management module determines, based on the application identifier, whether the first application enables the translation function. In this embodiment, the translation function of the first application is enabled, and the translation management module obtains the target language of the first application based on the application identifier.

S414: The translation module sends the target language to the text processing module.

S415: The text processing module obtains an original text language based on the original text, and determines whether the target language is the same as the original text language. In this embodiment, the target language is different from the original text language.

S416: The text processing module determines, based on the sensitive parameter, whether the first text control includes sensitive information. In this embodiment, the first text control does not include sensitive information.

In some embodiments, because some content displayed on a mobile phone of the user may be sensitive information (such as a password), a corresponding security mechanism is provided in an Android system, and a third-party application may set a Flag_SECURE attribute (a sensitive parameter) for a control, to notify the system that this interface includes sensitive information.

```
          FLAG_SECURE
          An electronic device ed in API level 1
          public static final int FLAG_SECURE
```

Window flag: treat the content of the window as secure, preventing it from an application earing in screenshots or from being viewed on non-secure displays.

In some embodiments, whether the current interface is sensitive information is obtained by using the Secure_Flag attribute of the control. In some embodiments, that the current interface does not include a sensitive parameter is determined by determining whether the Secure_Flag attribute of the current page is the same as default Secure_Flag that includes sensitive information. If the Secure_Flag attribute of the current page is the same as the default Secure_Flag that includes sensitive information, it is determined that the current interface includes a sensitive parameter. If the Secure_Flag attribute of the current page is different from the default Secure_Flag that includes sensitive information, it is determined that the current interface does not include a sensitive parameter.

In this embodiment, after the sensitive parameter of secure_flag is obtained, whether the current parameter includes a sensitive parameter is determined by using if ((params.flags & WindowManager.LayoutParams.FLAG_SECURE)=0). When a value of the foregoing statement is 0, the parameter of secure_flag does not include a sensitive parameter. Otherwise, the parameter of secure_flag includes a sensitive parameter.

S417: The first text control drawing module sends the original text and the target language to the translation module.

S418: The translation module translates the original text based on the target language, to obtain a translation text.

In some embodiments, the translation module may be a translation program at an application framework layer. Specifically, the translation program may be an APK file or the like stored locally in a system. In some embodiments, the translation program may be an application, and specifically, may be a file stored in a cloud or a third-party application. In some embodiments, the original text and the target language are input into the translation module to obtain the translation text. In this embodiment, the translation engine (engine) is invoked by using String dst=engine.translate(src), and the translation text is obtained from the translation engine, where scr is the original text, and dst is the translation text.

S419: The translation module sends the translation text to the text processing module.

S420: The text processing module calculates a width of an original text area based on the original text and the original text format parameter.

In some embodiments, the width of the original text area is obtained by using int weight=paint.measureText(src), where src is the original text, and paint.measureText is a method for obtaining the width based on the original text.

S421: In some embodiments, the text processing module calculates a translation text format parameter based on the width of the original text area and the translation text.

S4211: The text processing module sends the translation text and the translation text format parameter to the first text control drawing module.

S422: In some embodiments, the first text control drawing module draws a refreshed first text control based on the translation text, the translation text format parameter, and the control graphics parameter.

In some embodiments, in this embodiment, a first module implements text drawing by invoking canvas.drawText(dst, x, y, paint), where dst is the translation text, x and y are coordinates of a first character of the original text relative to a view, Paint is used to determine a style and a size of a font, and FontMetrics is an inner class of Paint and is used to define the original text format parameter and a corresponding parameter. A parameter of Paint may be obtained by using the translation text format parameter. In some embodiments, the format parameter of the original text is obtained by using paint.setTextSize(scrTextSize).

S423: The first text control drawing module sends the display content of the first text control to the display.

S424: The display displays the refreshed first text control.

In some embodiments, as shown in FIG. 4-2(a) and FIG. 4-2(b) and FIG. 4-6(a) and FIG. 4-6(b), steps S401 to S406 and S410 to S415 are the same as those in the foregoing embodiment. Details are not described herein again.

S416: The text processing module determines, based on the sensitive parameter, whether the first text control includes sensitive information. In this embodiment, the first text control includes sensitive information.

S417: The first text control drawing module draws the first text control based on the original text, the original text format, and the control graphic parameter. In some embodiments, the first text control drawing module may draw text content in the first text control by using canvas.drawText(Text, x, y, paint).

Subsequent steps of sending the display to the display for displaying is the same as those in the foregoing embodiment. Details are not described herein again.

In some embodiments, in S491, a translation text format parameter is first set to a first preset value. The first preset value includes a font size and word spacing. In this embodiment, a font size of the translation text is 40.0f, and the word spacing is a default value.

S492: Calculate a width of the translation text.

S493: Determine whether the width of the translation text is greater than a width of an original word text or a display width of a control.

S494: If the width of the translation text is greater than the width of the original text, adjust the first preset value, for example, decrease the font size or decrease the word spacing, and perform S491 again.

S495: If the width of the translation text is not greater than the width of the original text, set the current translation text format parameter to a translation text format parameter used when the first control is drawn.

In some embodiments, as shown in FIG. 4-1(a) and FIG. 4-1(b) and FIG. 4-7(a) and FIG. 4-7(b), the method includes:

S501: A text control drawing module obtains first information of a first text control from a first application. The first information includes an application identifier, an original text of the first text control, an original text format parameter of the first text control, a width of a first control, a sensitive parameter of the first text control, and a control graphic parameter of the first text control.

In some embodiments, a text control data obtaining module obtains the width of the first control by invoking a getMaxWidth() program interface.

S5011: The text control data obtaining module sends the application identifier, the original text of the first text control, the original text format parameter of the first text control, the width of the first control, and the sensitive parameter of the first text control to a text processing module.

S5012: The text control data obtaining module sends the control graphic parameter to the first text control drawing module.

In some embodiments, subsequent steps S506 to S506 are similar to steps S402 to S407 in the foregoing embodiment. Details are not described again.

S5101: A translation management module receives an indication for enabling a translation function. The indication of the translation function may enable the translation function in a manner such as S313, S323, S333, S342, or S352 described in the foregoing embodiment.

S510: The translation management module receives the indication for enabling the translation function, and stores related information of enabling the translation function and a target language.

S511: The text control drawing module obtains second information of the first text control from the first application. The first information includes the application identifier, the original text of the first text control, the original text format parameter of the first text control, the width of the first control, the sensitive parameter of the first text control, and the control graphic parameter of the first text control. In some embodiments, because the text control drawing module uses a periodic refresh mechanism, the second information and the first information may include same information or different information. In this embodiment, the second information and the first information include same information.

S5111: The text control data obtaining module sends the application identifier, the original text of the first text control, the original text format parameter of the first text control, the width of the first control, and the sensitive parameter of the first text control to the text processing module.

S5112: The text control data obtaining module sends the control graphic parameter to the first text control drawing module.

In some embodiments, subsequent steps S512 to S519 are similar to steps S412 to S419 in the foregoing embodiment. Details are not described again.

S520: The text processing module calculates a translation text format parameter based on the width of the control and a translation text.

S5211: The text processing module sends the translation text and the translation text format parameter to the first text control drawing module.

In some embodiments, subsequent steps S521 to S523 are similar to S422 to S424 in the foregoing embodiment. Details are not described again.

In some embodiments, as shown in FIG. 4-1(a) and FIG. 4-1(b) and FIG. 4-8(a) and FIG. 4-8(b), the method includes:

S601: A text control drawing module obtains first information of a first text control from a first application. The first information includes an application identifier, an original text of the first text control, an original text format parameter of the first text control, a width and a height of a first control, a sensitive parameter of the first text control, and a control graphic parameter of the first text control.

In some embodiments, a text control data obtaining module obtains the width and the height of the first control by invoking a getMaxWidth() program interface.

S6011: The text control data obtaining module sends the application identifier, the original text of the first text control, the original text format parameter of the first text control, the width and the height of the first control, and the sensitive parameter of the first text control to a text processing module.

S6012: The text control data obtaining module sends the control graphic parameter to the first text control drawing module.

In some embodiments, subsequent steps S506 to S506 are similar to steps S402 to S407 in the foregoing embodiment. Details are not described again.

S6101: A translation management module receives an indication for enabling a translation function. The indication of the translation function may enable the translation function in a manner such as S313, S323, S333, S342, or S352 described in the foregoing embodiment.

S610: The translation management module receives the indication for enabling the translation function, and stores related information of enabling the translation function and a target language.

S611: The text control drawing module obtains second information of the first text control from the first application. The first information includes the application identifier, the original text of the first text control, the original text format parameter of the first text control, the width and the height of the first control, the sensitive parameter of the first text control, and the control graphic parameter of the first text control. In some embodiments, because the text control drawing module uses a periodic refresh mechanism, the second information and the first information may include same information or different information. In this embodiment, the second information and the first information include same information.

S6111: The text control data obtaining module sends the application identifier, the original text of the first text control, the original text format parameter of the first text control, the width and the height of the first control, and the sensitive parameter of the first text control to the text processing module.

S6112: The text control data obtaining module sends the control graphic parameter to the first text control drawing module.

In some embodiments, subsequent steps S612 to S619 are similar to steps S412 to S419 in the foregoing embodiment. Details are not described again.

S620: The text processing module calculates a translation text format parameter based on the width and the height of the control, the translation text, and a quantity of translation text lines.

S6211: The text processing module sends the translation text, the translation text format parameter, and the quantity of translation text lines to the first text control drawing module.

S621: In some embodiments, the first text control drawing module draws a refreshed first text control based on the translation text, the translation text format parameter, the quantity of translation text lines, and the control graphic parameter.

In some embodiments, subsequent steps S622 and S523 are similar to S423 and S424 in the foregoing embodiment. Details are not described again.

As shown in FIG. 4-9 and FIG. 4-10(a) and FIG. 4-10(b), in some embodiments, the foregoing translation text format parameter may be obtained by using a getTextSize() method. The getTextSize() may be getTextSize(TextView tv, int w, String str), and indicates that a translation text str and an area width W are displayed as required, to obtain the translation text format parameter.

The getTextSize() is specifically:

```
               float getTextSize(TextView tv, int w, String str)
               {
                    //Maximum value of a character
                    float defaultSize=40.0f;
                    for(; ;)
                    {
                        mTextView.setTextSize(defaultSize);
                        Paint paint=mTextView.getPaint();
                        float wm=paint.measureText(str);
                        if(wm<=w)
                             break;
                        else
                             //Step decreased each time
                             defaultS ize -=0.1;
                    }
                    return defaultSize;
```

In some embodiments, as shown in FIG. 4-11, in S4910, set a translation text format parameter to a first preset value, where the first preset value includes a font size and word spacing.

S4911: Set a quantity of translation text lines to a second preset value, and calculate a width of a translation text based on the first preset value and the second preset value.

S4912: Determine whether the width of the translation text is greater than a display width of a control or a width of an original text.

S4913: If the width of the translation text is greater than the display width of the control or the width of the original text, increase the second preset value by one, and repeatedly perform S4911.

S4914: If the width of the translation text is not greater than the display width of the control or the width of the original text, determine whether a display height of the translation is greater than a height of the control or a display height of the original text.

S4915: If the display height of the translation text is greater than a preset height, adjust the first preset value, for example, decrease the font size or the word spacing, and repeatedly perform S4911.

S4916: If the display height of the translation text is not greater than the preset height, adjust the first preset value, and set the current translation text format parameter to a translation text format parameter used when a first control is drawn.

In this embodiment, for translation of the first control, an execution process of a first text control drawing module at an application framework layer is changed, and the first text control drawing module draws the first control by using ondraw(). In the drawing process, the translation text is directly used to replace the original text sent by an application, and the translation text is displayed on an original interface of the first control. In addition, by adjusting the format parameter, font deformation or confusion on the first control is avoided, thereby improving operation experience of the translated application. In addition, for a large quantity of applications that do not provide a multi-language menu, there is no need to provide a translation language package in the application, and there is no need to modify the original text in the application. A global translation effect of the first control may be implemented by using a system-level application framework layer of an electronic device, thereby preventing the application from occupying relatively large storage space, and providing near-native multilingual experience for users of different languages.

In some embodiments, as shown in FIG. 5-1(a) and FIG. 5-1(b) and FIG. 5-5(a) to FIG. 5-5(c), a control of an application further includes a first picture control used to display picture content, and the method further includes:

S801: A picture control drawing module obtains first information of a first picture control from a first application. The first information includes an application identifier, an original picture of the first picture control, and a control graphic parameter of the first picture control.

In some embodiments, as shown in FIG. 5-1(a) and FIG. 5-1(b), an interface of a first application is a window (window) 50, and the window 50 includes a first picture control 41, a second picture control 61, a third picture control 62, a fourth picture control 63, a first web page control 70, and a second web page control 710, a third web page control 72, and a fourth web page control 73.

The first picture control 41 includes: a text control 41a used to display an operator of a mobile communication signal, a picture control 41b used to display a mobile communication signal, a picture control 41c used to display a mobile communication signal, a picture control 41d used to display a wireless grid signal, a picture control 41f used to display a battery status, and a picture control 41g for a current time.

The second picture control 60 includes: a picture control 60a used to display a search identifier, a picture control 60b used to display a search box, and a text control 60c used to display a search button. The text control 60c may be a textview or a button control, and both belong to text controls that display texts.

The third picture control 61 includes: a text control 61a to 61g used to display identifiers of columns, and a picture control 61h used to display more content identifiers.

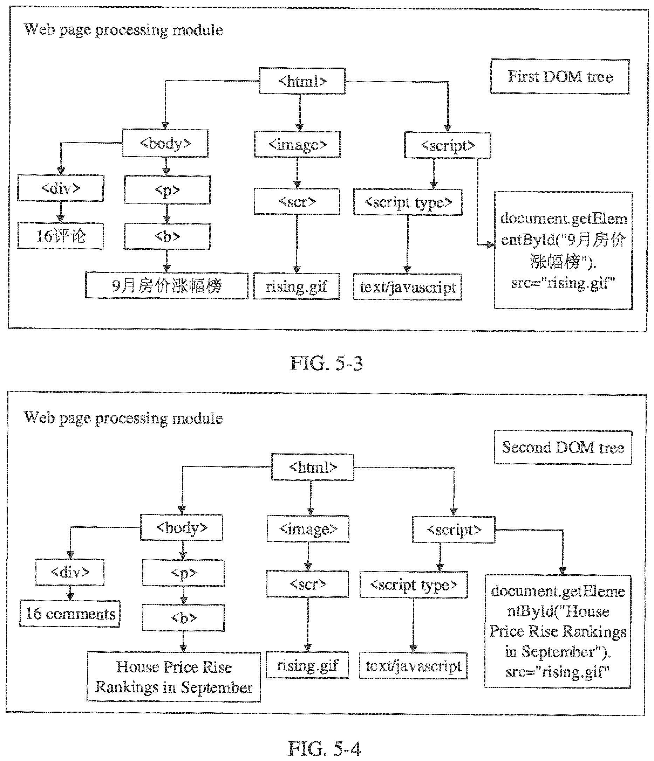

As shown in FIG. 5-7, in this embodiment, the following is a part of an XML file of the first picture control 62:

```
           < Image View
                      android:layout_width="wrap_content"
                      android:layout_height="wrap_content"
                      android: src="picture62"
                      />
```

In some embodiments, a picture (drawable) in the third control may be obtained by using a getDrawable() method or ContextCompat.getDrawable().

S8011: A picture control data obtaining module sends the application identifier and the original picture of the first picture control to a picture processing module.

S8012: The picture control data obtaining module sends the control graphic parameter to a first picture control drawing module.

S802: A picture control module sends the application identifier to a translation management module.

S803: The translation management module determines, based on the application identifier, whether the first application enables a translation function. In this embodiment, the translation function of the first application is disabled.

S804: The translation module sends, to the picture processing module, information that the translation function is disabled.

S8041: The picture processing module obtains the information that the translation function is disabled, and sends the original picture to the first picture control drawing module.

S805: The first picture control drawing module draws the first picture control based on the original picture and the control graphic parameter.

In one embodiment, the picture is converted into a bitmap (bitmap), and then the bitmap is displayed in a canvas. This can be implemented in the following programming language:

```
          Bitmap DrawableToBitmap(Drawable drawable)
          Canvas canvas=new Canvas(bitmap); and
          drawable.draw(canvas).
```

S806: The first picture control drawing module sends to-be-displayed content of the first picture control to a display.

S807: The display displays the first picture control.

S810: The translation management module receives an indication for enabling the translation function, and stores related information of enabling the translation function and a target language.

S811: The picture control drawing module obtains second information of the first picture control from the first application. The second information includes the application identifier, the original picture of the first picture control, and the control graphic parameter of the first picture control. In some embodiments, because the picture control drawing module uses a periodic refresh mechanism, the second information and the first information may include same information or different information. In this embodiment, the second information and the first information include same information.

S8111: The picture control data obtaining module sends the application identifier and the original picture of the first picture control to the picture processing module.

S8112: The picture control data obtaining module sends the control graphic parameter to the first picture control drawing module.

S812: The picture control module sends the application identifier to the translation management module.

S813: The translation management module determines, based on the application identifier, whether the first application enables the translation function. In this embodiment, the translation function of the first application is enabled, and the translation management module obtains the target language of the first application based on the application identifier.

S814: The translation module sends the target language to the picture processing module.

S815: An original text is obtained from the original picture by using an OCR (Optical Character Recognition optical character recognition) technology. Content of the original picture includes original text content and the first picture content.

S816: The picture processing module obtains an original text language based on the original text, and determines whether the target language is the same as the original text language. In this embodiment, the target language is different from the original text language.

S817: The first text control drawing module sends the original text and the target language to the translation module.

S818: The translation module translates the original text based on the target language, to obtain the translation text.

S819: The translation module sends the translation text to the picture processing module.

S820: The original text in the original picture is replaced with the translation text, to generate a second picture including the translation text. Second picture content includes translation text content and the first picture content.

S821: The picture processing module sends the second picture to the first picture control drawing module.

S822: In some embodiments, the first picture control drawing module draws a refreshed first picture control based on the second picture and the control graphic parameter.

S823: The first picture control drawing module sends display content of the first picture control to the display.

S824: The display displays the refreshed first picture control.

In some embodiments, as shown in FIG. 5-2(a) and FIG. 5-2(b), FIG. 5-3, FIG. 5-4, and FIG. 5-6(a) to FIG. 5-6(c), a control of an application further includes a first web page control used to display web page content, and the method further includes:

S901: A web page control drawing module obtains first information of a first web page control from a first application. The first information includes a to-be-displayed original HTML file of the first web page control, and a control graphic parameter.

In this embodiment, the following is a part of an XML file of a first web page control 62:

```
           <html>
                <body>
                      <P><b>House Price Rise Rankings in September</b></p>
                      <div>16 comments</div>
                      <img src="rising.gif'>
                      <Script type="text/javascript"
                             document.getElementByld("House Price Rise Rankings in September").
 src="rising.gif">
                      <Script type
              <body>
           <html>
```

In some embodiments, as shown in FIG. 5-7, a web page control data obtaining module may obtain an HTML file from a server by using webView.loadurl ("http://www.huawei.com"), or a local HTML file may be obtained by using webView.loadurl("android_asset/xx.html"). The local HTML file is stored in an asset folder of an Android program.

S9011: The web page control data obtaining module sends an application identifier and the original HTML file of the first web page control to a web page processing module.

S9012: The web page control data obtaining module sends the control graphic parameter to a first web page control drawing module.

S902: A web page control module sends the application identifier to a translation management module.

S903: The translation management module determines, based on the application identifier, whether the first application enables a translation function. In this embodiment, the translation function of the first application is disabled.

S904: The translation module sends, to the web page processing module, information that the translation function is disabled.

S905: The web page processing module obtains the information that the translation function is disabled, and converts the original HTML file into a first DOM tree based on an identifier in the HTML, as shown in FIG. 5-3.

S905: The first web page control drawing module sequentially generates a RenderObject tree and a RenderLayer tree based on the first DOM tree, and draws the first web page control.

S906: The first web page control drawing module sends to-be-displayed content of the first web page control to a display.

S907: The display displays the first web page control.

S9101: The translation management module receives an indication for enabling the translation function. The indication of the translation function may enable the translation function in a manner such as S313, S323, S333, S342, or S352 described in the foregoing embodiment.

S910: The translation management module receives the indication for enabling the translation function, and stores related information of enabling the translation function and a target language.

S911: The web page control drawing module obtains second information of the first web page control from the first application. The second information includes the original HTML file. In some embodiments, because the web page control drawing module uses a periodic refresh mechanism, the second information and the first information may include same information or different information. In this embodiment, the second information and the first information include same information.

S9111: The web page control data obtaining module sends the application identifier and the original HTML file to the web page processing module.

S9112: The web page control data obtaining module sends the control graphic parameter to the first web page control drawing module.

S912: The web page control module sends the application identifier to the translation management module.

S913: The translation management module determines, based on the application identifier, whether the first application enables the translation function. In this embodiment, the translation function of the first application is enabled, and the translation management module obtains the target language of the first application based on the application identifier.

S914: The translation module sends the target language to the web page processing module.

S915: The web page processing module converts the original HTML file into the first DOM tree based on the identifier in the HTML, as shown in FIG. 5-3, and obtains a to-be-translated original text.

In some embodiments, a method of identifying the to-be-translated original text includes: finding the to-be-translated original text by scanning the DOM tree of the HTML file. A DOM is a standard defined by the World Wide Web Consortium. When HTML content is loaded, a DOM tree is automatically generated. The DOM tree represents a document as a node object tree. In the DOM tree, each node corresponds to a part of the document. Nodes can be of various types, including, for example, a root node, an element node, an attribute node, a text node, and a script node, a node type can be determined by recognizing an annotation in the HTML. For example, <title> represents a title element node, and <p> represents a text node. A content type corresponding to each node is determined based on the node type, and content such as a text, a title, a person name, and a table is determined as the to-be-translated original text.

S916: The web page processing module obtains an original text language based on the original text, and determines whether the target language is the same as the original text language. In this embodiment, the target language is different from the original text language.

S917: The web page control drawing module sends the original text and the target language to the translation module.

S918: The translation module translates the original text based on the target language, to obtain a translation text.

S919: The translation module sends the translation text to the web page processing module.

S920: The original text in the first DOM tree is replaced with the translation text, to generate a second DOM tree including the translation text.

S921: The web page processing module sends the second DOM tree to the first web page control drawing module.

S922: In some embodiments, the first web page control drawing module sequentially generates the RenderObject tree and the RenderLayer tree based on the second DOM tree, and draws a refreshed first web page control.

S923: The first web page control drawing module sends display content of the first web page control to a display.

S924: The display displays the refreshed first web page control.

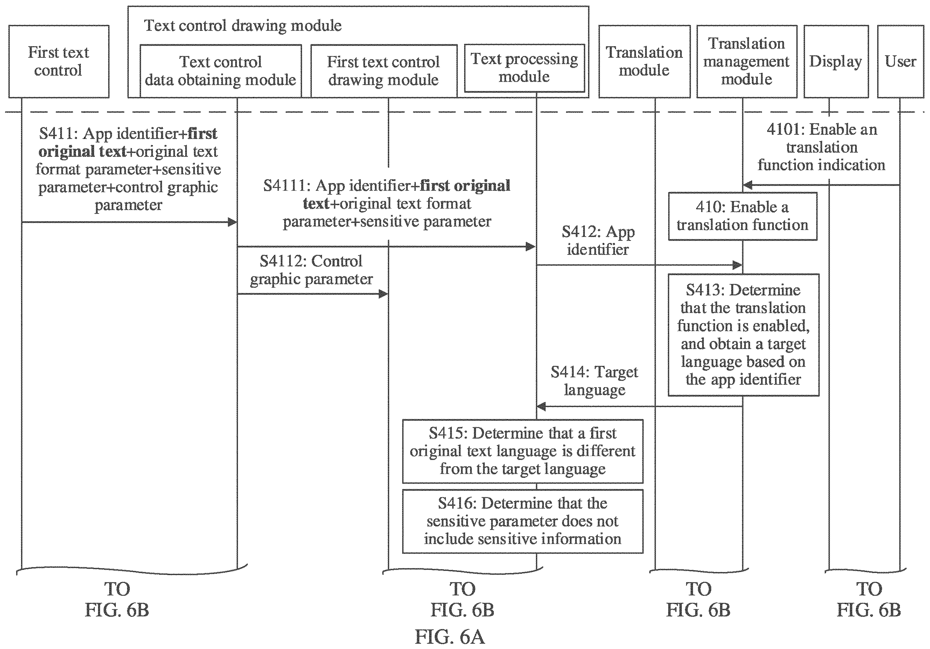

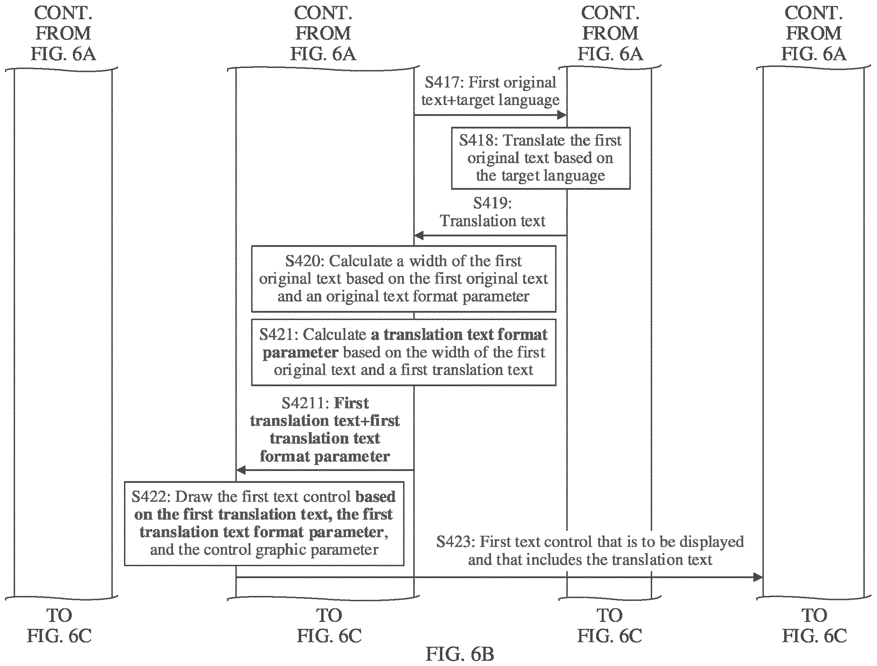

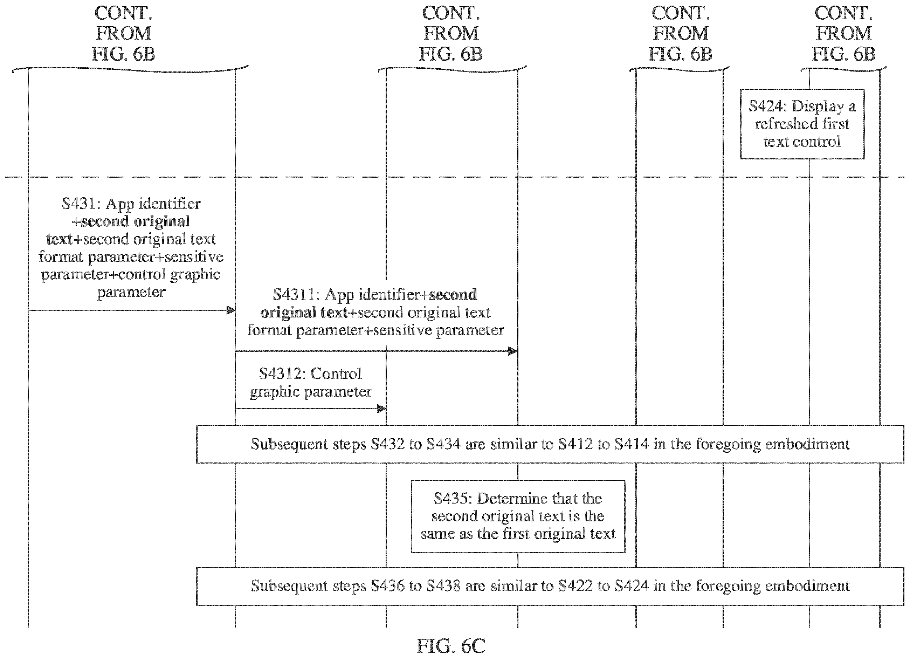

As shown in FIG. 6A to FIG. 6C, in some embodiments, in S411, a text control drawing module obtains second information of a first text control from a first application. The first information includes an application identifier, a first original text of the first text control, an original text format parameter of the first text control, a sensitive parameter of the first text control, and a control graphic parameter of the first text control.

S4111: A text control data obtaining module sends the application identifier, the first original text of the first text control, the original text format parameter of the first text control, and the sensitive parameter of the first text control to a text processing module.

S4112: The text control data obtaining module sends the control graphic parameter to a first text control drawing module.

S412: A text control module sends the application identifier to a translation management module.

S413: The translation management module determines, based on the application identifier, whether the first application enables a translation function. In this embodiment, the translation function of the first application is enabled, and the translation management module obtains a target language of the first application based on the application identifier.

S414: A translation module sends the target language to the text processing module.

S415: The text processing module obtains an original text language based on the first original text, and determines whether the target language is the same as the original text language. In this embodiment, the target language is different from the original text language.

S416: The text processing module determines, based on the sensitive parameter, whether the first text control includes sensitive information. In this embodiment, the first text control does not include sensitive information.

S417: The first text control drawing module sends the first original text and the target language to the translation module.

S418: The translation module translates the first original text based on the target language, to obtain a first translation text.

S419: The translation module sends the first translation text to the text processing module.

S420: The text processing module calculates a width of an original text area based on the first original text and the original text format parameter.

S421: In some embodiments, the text processing module calculates a first translation text format parameter based on the width of the original text area and the first translation text.

S4211: The text processing module sends the first translation text and the first translation text format parameter to the first text control drawing module.

S422: In some embodiments, the first text control drawing module draws a refreshed first text control based on the first translation text, the translation text format parameter, and the control graphic parameter.

S423: The first text control drawing module sends display content of the first text control to a display.

S424: The display displays the refreshed first text control.

S411: A text control drawing module obtains third information of a first text control from a first application. The first information includes an application identifier, a second original text of the first text control, an original text format parameter of the first text control, a sensitive parameter of the first text control, and a control graphic parameter of the first text control. In some embodiments, because the text control drawing module uses a periodic refresh mechanism, the second information and the first information may include same information or different information. In this embodiment, the second information and the first information include same information.

S4111: The text control data obtaining module sends the application identifier, the second original text of the first text control, the original text format parameter of the first text control, and the sensitive parameter of the first text control to a text processing module.

S4112: The text control data obtaining module sends the control graphic parameter to a first text control drawing module.

S412: A text control module sends the application identifier to a translation management module.

S413: The translation management module determines, based on the application identifier, whether the first application enables a translation function. In this embodiment, the translation function of the first application is enabled, and the translation management module obtains a target language of the first application based on the application identifier.

S414: A translation module sends the target language to the text processing module.

S4350: Determine whether the second original text is the same as a first original text.

S435: The second original text is the same as the first original text.

S4351: The text processing module sends the first translation text and a first translation text format parameter to the first text control drawing module.

An electronic device stores the first translation text and the first translation text format parameter in a cache of the electronic device system after performing a previous refresh. When a second refresh is performed, the first translation text and the first translation text format parameter that are used when the previous refresh is performed may be directly invoked.

Subsequent steps S436 to S438 are similar to S422 to S424 in the foregoing embodiment.

S445: The second original text is different the first original text.

S446: The text processing module determines, based on the sensitive parameter, whether the first text control includes sensitive information. In this embodiment, the first text control does not include sensitive information.

S447: The first text control drawing module sends the first original text, the second original text, and the target language to the translation module.

S448: The translation module translates the first original text and the second original text based on the target language, to obtain the first translation text and a second translation text.

S449: The translation module sends the first translation text and the second translation text to the text processing module.

S450: The text processing module calculates a width of an original text area based on the first original text, the second original text, and the original text format parameter.

S451: In some embodiments, the text processing module calculates the first translation text format parameter and a second translation text parameter based on the width of the original text area, the first translation text, and the second translation text.

S4511: The text processing module sends the first translation text, the second translation text, the first translation text format parameter, and the second translation text format parameter to the first text control drawing module.

S452: In some embodiments, the first text control drawing module draws a refreshed first text control based on the first translation text, the second translation text, the translation text format parameter, and the control graphic parameter.

S453: The first text control drawing module sends display content of the first text control to a display.

S454: The display displays the refreshed first text control.

In some embodiments, because a refresh frequency of the electronic device is relatively high, and performing translation during each refresh increases an operating burden of the electronic device. Considering that a user usually performs an interactive operation on the electronic device at an interval, repeated translation work is reduced by increasing determining on original text content, thereby reducing the operating burden of electronic device.

In some embodiments, after S417, step S418 includes:

After the translation module receives the original text and the target language, when the translation module translates the original text, in S700, a first module queries, based on the application identifier and the target language, whether a corresponding storage unit exists in a cache.

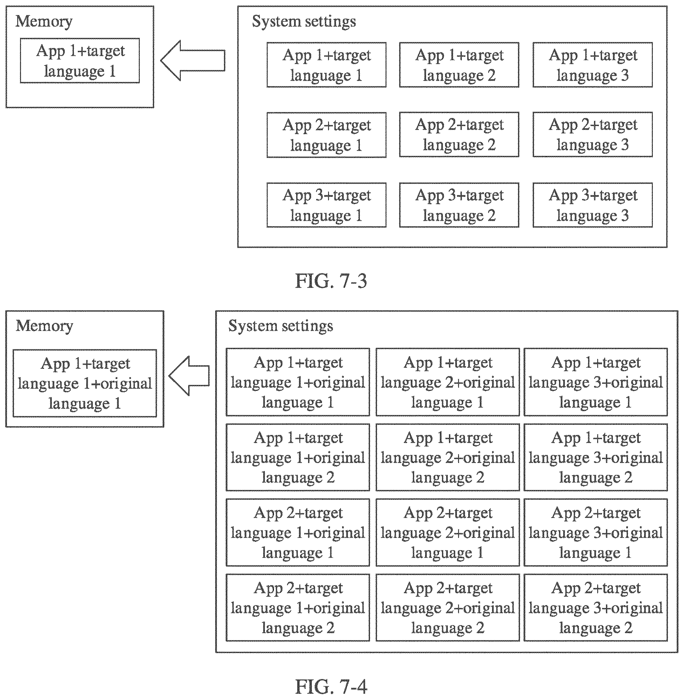

As shown in FIG. 7-3, the cache is divided into different storage units based on the application identifier and the target language. Each storage unit stores a corresponding translation between the original language and the target language, and the original language is a language that is currently applied to the application and that is detected by the application based on text content. When the application needs to invoke a translation result, a corresponding storage unit may be invoked by using the application and the target language. In some embodiments, the application is a name of an application, a globally unique identifier of an application, or the like. An identifier of the target language may be a preset character, for example, CN in Chinese, EN in English, JP in Japanese, and the like.

In some embodiments, as shown in FIG. 7-4, the cache is divided into different storage units based on the application identifier, the original language, and the target language. In some embodiments, when a current language of the application changes, a user may change the language of the current application by selecting different language versions in the application. For example, when it is found that the user changes the current language of the application from Chinese to English, in this case, the cache creates a new storage unit based on the English, the application identifier, and the target language, to prevent confusion with an original storage unit. The confusion causes a normal translation failure.

In some embodiments, when the application is removed from the electronic device, the storage unit corresponding to the application is deleted from the cache based on the application identifier. When the electronic device unloads the application, the electronic device broadcasts, by using an information manager at an application framework layer, information about uninstalling the application. The information includes the application identifier. When the cache detects the broadcast sent by the system, the cache deletes, based on the application identifier, the storage unit corresponding to the application.

In this embodiment, according to the translation method provided in this embodiment, all application interfaces in the mobile phone may be translated. However, if all translation results are loaded to content, relatively large memory space is occupied. When the translation result is stored in the cache based on the storage unit, page freezing caused by invoking a memory for translation in a conventional translation method can be avoided, so that a translation processing time is reduced, a text display speed is accelerated, and system running efficiency is improved.

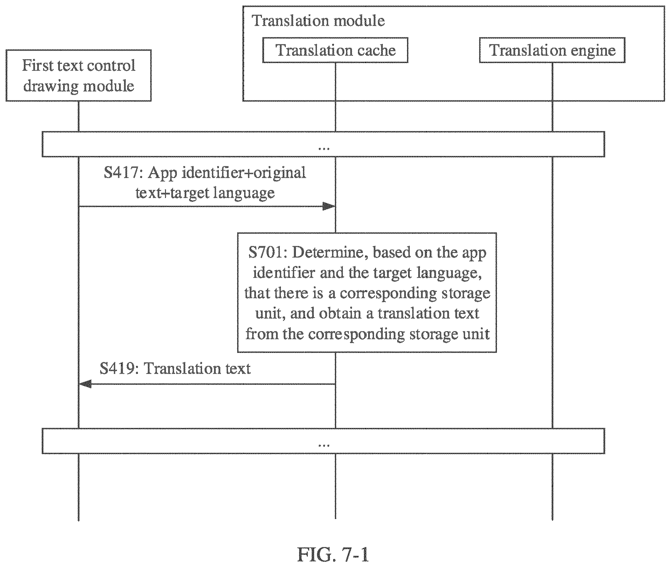

As shown in FIG. 7-1, in S701, if there is a corresponding storage unit in the cache, the translation module determines, based on the application identifier and the target language, that there is a corresponding storage unit, and obtains a translation text from the corresponding storage unit.

A subsequent step is performing S419.

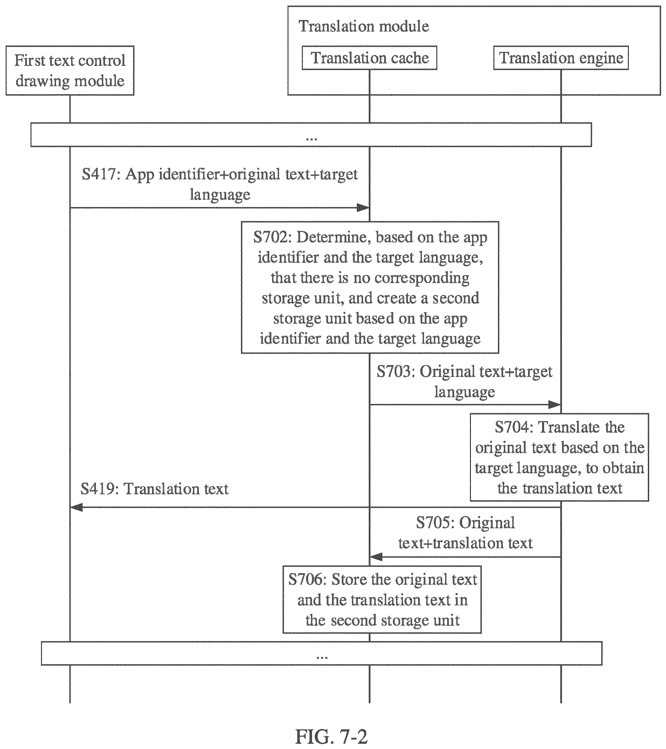

As shown in FIG. 7-2, in S702, if there is no corresponding storage unit in the cache, a second storage unit is created based on the application identifier and the target language. The first storage unit may be identified by using the application as the target language.

S703: The translation module sends the original text and the target language to a translation engine.

S704: The translation engine translates the original text based on the target language, to obtain the translation text.

S705: Save the original text and the translation text to the second storage unit.

A subsequent step is performing S419.

In the technical solution provided in this application, because the translation is performed in a display process of a control, the system needs to provide a relatively fast loudness speed during translation. An application interface translation speed and the text display speed are accelerated by using the cache (cache), thereby reducing the translation processing time, and avoiding interface freezing due to an excessive amount of translation.

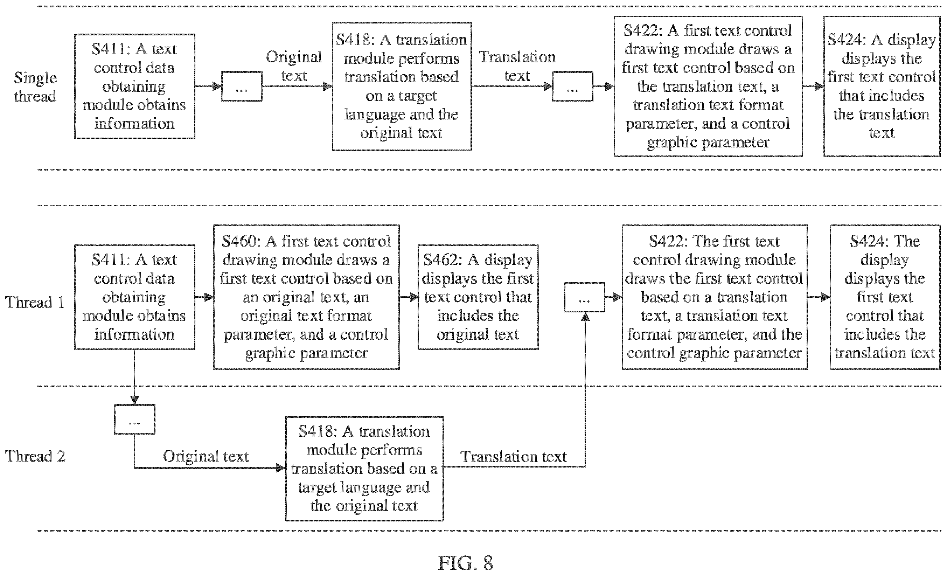

As shown in FIG. 8, in some embodiments, when the text processing module of the electronic device determines that the translation module needs to be invoked to perform translation, the electronic device simultaneously invokes two different threads. A first thread is used to draw a control based on the original text, and a second thread is used to execute a translation process. In this way, this avoids a problem of interface display freezing or blank display on the interface of the electronic device brought by translation.

In some embodiments, the first thread performs S411 to S416 in the foregoing embodiment.

S460: After S416 ends, when the text processing module determines that the translation module needs to be invoked to perform translation, the first text control drawing module draws the first text control based on the original text, the original text format parameter, and the control graphic parameter.

S423: The first text control drawing module sends the display content of the first text control to the display.

S424: The display displays the refreshed first text control.

In addition, the electronic device sends the original text and the target language to the translation module in the second thread.

In the second thread, in S418, the translation module translates the original text based on the target language, to obtain the translation text.

S419: After completing translation, the translation module sends the translation text to the text processing module in the first thread.

After receiving the translation text, the text processing module in the first thread continues to perform S420 to S424.

In this embodiment, different threads are used to process drawing and translation work at the same time, so that display freezing caused by a relatively long translation time is avoided, and user experience is improved.

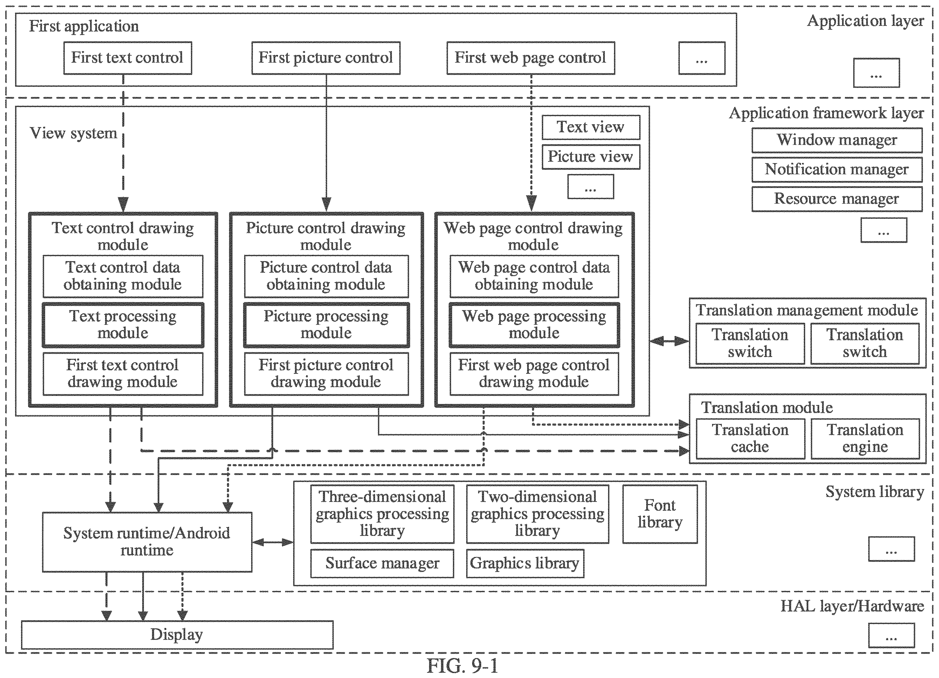

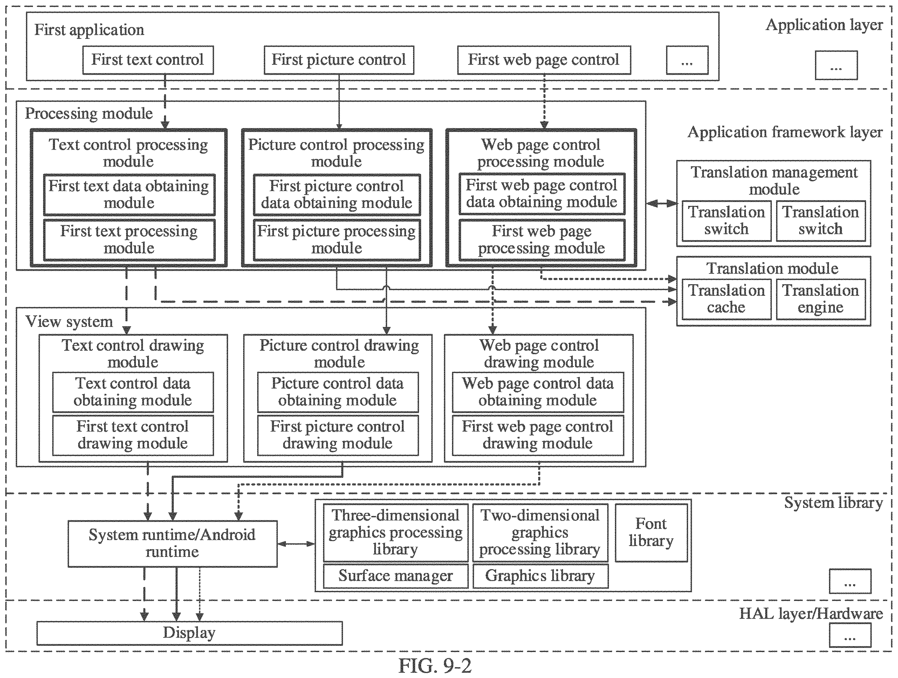

As shown in FIG. 9-1 and FIG. 9-2, a working process of software and hardware of the method in this application in the electronic device 100 is described as an example.

In some embodiments, a view manager obtains an XML file of an app at an application layer. Specifically, the view manager parses an XML of a first text control and an XML of a first picture control in a first app, and obtains displayed content in a webview by using webview.loadurl().

In some embodiments, the view manager includes a text control drawing module, a picture control drawing module, and a web page control drawing module. The text control drawing module is configured to draw a native Android control (excluding the webveiw) that can display text content, for example, a buttonview, a listview, or a Textview. The picture control drawing module is configured to draw an imageview control. The web page control drawing module is configured to draw the webview control.

As shown in FIG. 9-1, a first software module includes a text control drawing module, a picture control drawing module, and a web page control drawing module; and a second software module includes a translation module and a translation management module.

In some embodiments, the text control drawing module includes a text control data obtaining module, a first text control drawing module, and a text processing module. The text processing module is configured to process an original text. The text processing module obtains a translation text by interacting with the translation management module and the translation module. The text processing module is a newly added software module in some embodiments provided in this application. The first text control drawing module is configured to draw a text control that includes the original text or the translation text. A function of the first text control drawing module is different from that of a drawing module in the conventional technology. The text control data obtaining module is configured to obtain data required in a display process. A function of the text control data obtaining module is different from that of a data obtaining module in the conventional technology.

In some embodiments, the picture control drawing module includes a picture control data obtaining module, a first picture control drawing module, and a picture processing module. The picture processing module is configured to process the original text. The picture processing module obtains the translation text by interacting with the translation management module and the translation module. The picture processing module is a newly added software module in some embodiments provided in this application. The first picture control drawing module is configured to draw a picture control that includes the original text or the translation text. A function of the first picture control drawing module is different from that of a drawing module in the conventional technology. The picture control data obtaining module is configured to obtain data required in a display process. A function of the picture control data obtaining module is different from that of a data obtaining module in the conventional technology.

In some embodiments, the web page control drawing module includes a web page control data obtaining module, a first web page control drawing module, and a web page processing module. The web page processing module is configured to process the original text. The web page processing module obtains the translation text by interacting with the translation management module and the translation module. The web page processing module is a newly added software module in some embodiments provided in this application. The first web page control drawing module is configured to draw a web page control that includes the original text or the translation text. A function of the first web page control drawing module is different from that of a drawing module in the conventional technology. The web page control data obtaining module is configured to obtain data required in a display process. A function of the web page control data obtaining module is different from that of a data obtaining module in the conventional technology.

As shown in FIG. 9-2, a first software module includes a text control drawing module, a picture control drawing module, a web page control drawing module, a text control processing module, a picture processing drawing module, and a web page control processing module; and a second software module includes a translation module and a translation management module.

In some embodiments, a text processing module is configured to process an original text. The text processing module obtains a translation text by interacting with the translation management module and the translation module. The text processing module includes a first text control data obtaining module and a first text processing module. The text processing module is a newly added software module in some embodiments provided in this application. The text control drawing module includes a text control data obtaining module and a first text control drawing module. A function of the text control drawing module is similar to that of a drawing module in the conventional technology. The text control data obtaining module is configured to obtain data required in a display process. The first text control drawing module is configured to draw a text control, and data of the text control is obtained by using the text control data obtaining module.

In some embodiments, a picture processing module is configured to process the original text. The picture processing module obtains the translation text by interacting with the translation management module and the translation module. The picture processing module includes a first picture control data obtaining module and a first picture processing module. The picture processing module is a newly added software module in some embodiments provided in this application. The picture control drawing module includes a picture control data obtaining module and a first picture control drawing module. A function of the picture control drawing module is similar to that of a drawing module in the conventional technology. The picture control data obtaining module is configured to obtain data required in a display process. The first picture control drawing module is used for a picture control, and the picture control is obtained by using the picture control data obtaining module.

In some embodiments, a web page processing module is configured to process the original text. The web page processing module obtains the translation text by interacting with the translation management module and the translation module. The web page processing module includes a first web page control data obtaining module and a first web page processing module. The web page processing module is a newly added software module in some embodiments provided in this application. The web page control drawing module includes a web page control data obtaining module and a first web page control drawing module. A function of the web page control drawing module is similar to that of a drawing module in the conventional technology. The web page control data obtaining module is configured to obtain data required in a display process. The first web page control drawing module is configured to draw a web page control, and the web page control is obtained by using the web page control data obtaining module.

In some embodiments, a system library draws a view management module to obtain an app interface that includes a plurality of controls. After being rendered, the app interface is an interface visible to a user. In the rendering process, the system library is used, for example, a font library, a three-dimensional graphics processing library, a two-dimensional graphics processing library, a surface manager, and a picture library.

In some embodiments, a to-be-displayed app interface that is rendered by the system library is displayed by using a display, so that the user can view a refreshed app interface on the display.

In addition, function units in embodiments of this application may be integrated into one processing unit, each of the units may exist alone physically, or two or more units may be integrated into one unit. The implementations of this application may be randomly combined, to achieve different technical effects.

Related parts of the method embodiments in this application may be mutually referenced. The apparatuses provided in the apparatus embodiments are configured to perform the methods provided in the corresponding method embodiments. Therefore, for the apparatus embodiments, refer to related parts in the related method embodiments for understanding.

In this application, "and/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects.

In this application, "at least one" means one or more, and "a plurality of" means two or more. "At least one of the following items (pieces)" or a similar expression thereof indicates any combination of these items, including any combination of singular items (pieces) or plural items (pieces). For example, "at least one of a, b, or c", or "at least one of a, b, and c" may indicate: a, b, c, a-b (namely, a and b), a-c, b-c, or a-b-c, where a, b, and c may be singular or plural.

It should be understood that sequence numbers of the foregoing processes do not mean execution sequences in various embodiments of this application. Some or all of the steps may be performed in parallel or in sequence. The execution sequences of the processes should be determined based on functions and internal logic of the processes, and should not be construed as any limitation on the implementation processes of embodiments of this application.

It should be understood that although terms "first", "second", "third", and the like may be used in embodiments of the present invention to describe various messages, requests, and terminals, the messages, the requests, and the terminals are not limited by the terms. These terms are merely used to distinguish the messages, requests, and terminals. For example, without departing from the scope of embodiments of the present invention, a first terminal may also be referred to as a second terminal, and similarly, a second terminal may also be referred to as a first terminal.

Depending on the context, for example, words "if" used herein may be explained as "while" or "when" or "in response to determining" or "in response to detection". Similarly, depending on the context, phrases "if determining" or "if detecting (a stated condition or event)" may be explained as "when determining" or "in response to determining" or "when detecting (the stated condition or event)" or "in response to detecting (the stated condition or event)".

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In some embodiments of this application, the electronic device may be divided into function modules based on the foregoing method examples. For example, each function module corresponding to each function may be obtained through division, or two or more functions may be integrated into one processing module. The integrated module may be implemented in a form of hardware. It should be noted that, in some embodiments of this application, module division is an example, is merely logical function division, and may be other division during actual implementation.

A person skilled in the art may clearly understand that, for the purpose of convenient and brief description, for a detailed working process of the foregoing system, apparatus, and unit, refer to a corresponding process in the foregoing method embodiment. Details are not described herein again.

A person of ordinary skill in the art should understand that all or some of the steps of the method specified in any foregoing embodiment may be implemented by a program instructing related hardware. The program may be stored in a readable storage medium, in a device, such as a FLASH memory, or an EEPROM. When the program runs, the program executes all or part of the steps described above.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, a terminal device, or the like) to perform all or some of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc. All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, the processes or functions according to this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk)), or the like.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of the present invention.

## Claims

1. A method for translating an interface of an application, comprising:
obtaining, by a first software module in an electronic device, a first layout file from a first application, wherein the first layout file is used to draw a first interface of the first application, and the first layout file comprises first text content;
drawing, by the first software module, the first interface based on the first layout file;
displaying, by the electronic device, the first interface, wherein the first text content is displayed on the first interface;
detecting, by the electronic device, a first operation;
in response to the first operation, sending, by the first software module, the first text content to a second software module in the electronic device for translation, obtaining, by the first software module, second text content from the second software module, and drawing, by the first software module, a second interface of the first application based on the first layout file and the second text content, wherein the second text content is obtained after the first text content is translated;
in response to the first operation, displaying, by the electronic device, the second interface, wherein the second text content is displayed on the second interface;
detecting, by the electronic device, a second operation in a first area of the second interface, wherein the first area is located near the second text content; and
displaying, by the electronic device, a third interface of the first application in response to the second operation, wherein the third interface is associated with the first text content.

2. The method according to claim 1, wherein the first interface comprises a first text control, the first layout file comprises first information, the first information comprises the first text content, and the first information is used to draw the first text control;
the drawing, by the first software module in the electronic device, the first interface based on the first layout file comprises: drawing, by the first software module in the electronic device, the first text control based on the first information;
the displaying, by the electronic device, the first interface, wherein the first text content is displayed on the first interface comprises: displaying, by the electronic device, the first text control, wherein the first text content is displayed in the first text control;
the drawing, by the first software module, a second interface based on the first layout file and the second text content comprises: drawing, by the first software module, a second text control based on the first information and the second text content; and
the displaying, by the electronic device, the second interface, wherein the second text content is displayed on the second interface comprises: displaying, by the electronic device, the second text control, wherein the second text content is displayed in the second text control, wherein
that the first area is located near the second text content comprises: the first area is located near the second text control; and
that the third interface is associated with the first text content comprises: the third interface is associated with the first text control.

3. The method according to claim 2, wherein that the third interface is associated with the first text control comprises: the third interface is an interface linked to the first text control; or the third interface is an interface linked to a picture control associated with the first text control, wherein the picture control is located in the first area.

4. The method according to any one of claims 1 to 3, wherein the first layout file is an extensible markup language XML file, and the XML file comprises the first information.

5. The method according to any one of claims 1 to 4, wherein the first text control and the second text control each are any one of the following: a text view textview control and a list view listview control.

6. The method according to any one of claims 1 to 5, wherein
the first software module and the second software module belong to an application framework layer of the electronic device.

7. The method according to any one of claims 1 to 6, wherein the sending, by the first software module, the first text content to a second software module in the electronic device for translation, and obtaining, by the first software module, second text content from the second software module comprises:
sending, by the first software module, the first text content to the second software module; and
translating, by the second software module, the first text content to obtain the second text content; and
sending, by the second software module, the second text content to the first software module.

8. The method according to claim 7, wherein the first text content is in a first language, and the second text content is in a second language;
a storage module is disposed in the second software module; and
the translating, by the second software module, the first text content to obtain the second text content comprises:
determining, based on an identifier of the first application and the second language, that a first storage unit is stored in the storage module, wherein the first storage unit corresponds to the identifier of the first application and the second language, and the second text content corresponding to the first text content is stored in the first storage unit; and
obtaining, from the first storage unit, the second text content corresponding to the first text content.

9. The method according to claim 7, wherein the first text content is in a first language, and the second text content is in a second language;
a storage module and a translation engine are disposed in the second software module; and
the translating, by the second software module, the first text content to obtain the second text content comprises:
determining, based on an identifier of the first application and the second language, whether a first storage unit is stored in the storage module, wherein the first storage unit corresponds to the identifier of the first application and the second language;
when the first storage unit is not stored in the storage module, creating the first storage unit in the storage module;
translating the first text content by using the translation engine, and obtaining the second text content corresponding to the first text content; and
storing the first text content and the corresponding second text content in the created first storage unit.

10. The method according to any one of claims 2 to 9, wherein the first layout file further comprises a first parameter and a second parameter of the first text control, the first parameter comprises a format parameter of the first text content, and the second parameter comprises an appearance parameter corresponding to the first text control; and
before the displaying, by the electronic device, the second interface, the method further comprises:
obtaining, by the first software module, a third parameter based on at least one of the first parameter and the second parameter, wherein the third parameter comprises a format parameter of the second text content; and
drawing, by the first software module, the second text control based on the second parameter and the third parameter.

11. The method according to claim 10, wherein the format parameter of the first text content or the format parameter of the second text content comprises one or more of the following parameters: a font parameter, a font size parameter, a word spacing parameter, and a line spacing parameter, and a parameter of a quantity of words per line, and a parameter of a quantity of lines.

12. The method according to any one of claims 2 to 11, wherein the first layout file further comprises a fourth parameter, and the fourth parameter is used to indicate whether the first text control comprises security information; and
before the sending, by the first software module, the first text content to the second software module, the method further comprises:
determining, by the first software module based on the fourth parameter, that the first text control does not comprise the security information.

13. The method for translating an interface of an application according to any one of claims 1 to 12, wherein the first interface comprises a first picture control, the first layout file further comprises third information, the third information comprises a path corresponding to a first picture, the first picture comprises third text content, and the third information is used to draw the first picture control;
the drawing, by the first software module in the electronic device, the first interface based on the first layout file comprises: based on the third information, obtaining, by the first software module in the electronic device, the first picture and drawing the first picture control;
the displaying, by the electronic device, the first interface comprises: displaying, by the electronic device, the first picture control, wherein the first picture is displayed in the first picture control, and the third text content is displayed in the first picture;
in response to the first operation, the method further comprises:
obtaining, by the first software module, the third text content from the first picture by using an optical character recognition OCR method;
sending, by the first software module, the third text content to the second software module for translation;
obtaining, by the first software module, fourth text content from the second software module, wherein the fourth text content is obtained after the third text content is translated;
replacing, by the first software module, the third text content in the first picture with the fourth text content, to obtain a second picture comprising the fourth text content; and
drawing, by the first software module, a second picture control based on the first layout file and the second picture; and
the displaying, by the electronic device, the second interface comprises: displaying, by the electronic device, the second picture control, wherein the second picture is displayed in the second picture control, and the fourth text content is displayed in the second picture.

14. The method according to any one of claims 1 to 13, wherein the first interface comprises a first web page control, the first layout file comprises fifth information of the first web page control, and the method further comprises: obtaining, by the first software module in the electronic device from the first application based on the fifth information, a first uniform resource locator URL corresponding to the first web page control, and obtaining, based on the first URL, a first hypertext markup language HTML file corresponding to the first URL, wherein the first HTML file comprises fifth text content, and the first HTML file is used to draw the first web page control;
the drawing, by the first software module, the first interface based on the first layout file comprises: obtaining, by the first software module based on the first HTML file, a first document object model DOM tree corresponding to the first HTML file, obtaining the fifth text content from the first DOM tree, and drawing the first web page control based on the fifth text content;
the displaying, by the electronic device, the first interface comprises: displaying, by the electronic device, the first web page control, wherein the fifth text content is displayed in the first web page control;
in response to the first operation, the method further comprises:
sending, by the first software module, the fifth text content to the second software module for translation, and obtaining, by the first software module, sixth text content from the second software module, wherein the sixth text content is obtained after the fifth text content is translated;
replacing, by the first software module, the first text content in the first DOM tree with the second text content, to obtain a second DOM tree comprising the second text content; and
drawing, by the first software module, a second web page control based on the first layout file and the second DOM tree; and
the displaying, by the electronic device, the second interface comprises: displaying, by the electronic device, the second web page control, wherein the sixth text content is displayed in the second web page control.

15. An electronic device, comprising one or more touchscreens, one or more memories, and one or more processors, wherein the one or more memories store one or more programs, and when the one or more processors execute the one or more programs, the electronic device is enabled to implement the method according to any one of claims 1 to 14.

16. A computer-readable storage medium, comprising instructions, wherein when the instructions are run on an electronic device, the electronic device is enabled to perform the method according to any one of claims 1 to 14.

17. A computer program product, wherein when the computer program product runs on an electronic device, the electronic device is enabled to perform the method according to any one of claims 1 to 14.
